# EUROPEAN PATENT APPLICATION

(11) **EP 2 899 475 A1**
(43) Date of publication of application: **29.07.2015**
(21) Application number: 13838451.6
(22) Date of filing: 20.09.2013
(51) Int. Cl.: F24H 1/00, F24H 1/18, H01M 8/00, H01M 8/04

(54) **COGENERATION SYSTEM AND OPERATING METHOD OF COGENERATION SYSTEM**

(30) Priority: 20.09.2012 JP 2012206608
(71) Applicant: Panasonic Intellectual Property Management Co., Ltd., Osaka-shi, Osaka 540-6207 (JP)
(72) Inventor: KOKUBU, Hirofumi, Osaka 540-6207 (JP); YOSHIMURA, Akihisa, Osaka 540-6207 (JP); KUSUMURA, Koichi, Osaka 540-6207 (JP); NAKAMURA, Akinari, Osaka 540-6207 (JP)
(74) Representative: Grünecker Patent- und Rechtsanwälte PartG mbB
(86) International application number: PCT/JP2013/005577
(87) International publication number: WO 2014/045593

(57) **Abstract**

A cogeneration system according to the present invention includes a power generator (2), a first circulation passage (3), a first heat medium circulator (4), a first heater (5), a first temperature detector (7), a first tank (10), a first valve (11A, 11B), and a controller (16). The first heat medium circulator (4) is configured to cause a first heat medium to flow from the first heater (5) toward the first temperature detector (7). The controller (16) performs a first heating operation of heating the first heat medium by the first heater (5) and activating the first heat medium circulator (4). In a case where a temperature detected by the first temperature detector (7) after the first heating operation is lower than a preset first predetermined temperature or in a case where a temperature difference between the temperatures detected by the first temperature detector (7) before and after the first heating operation is a temperature change smaller than a preset first temperature difference, the controller (16) determines that the cogeneration system is abnormal.

## Description

### Technical Field

The present invention relates to a cogeneration system and a method of operating the cogeneration system.

### Background Art

As cogeneration systems, gas engine power generators and gas engine cogeneration systems have been known, and in recent years, fuel cell cogeneration systems which use fuel cells to supply electric power and heat are especially attracting attentions. In many of these cogeneration systems, a power generator, such as a gas engine or a fuel cell, and a hot water tank as a heat accumulator for effectively utilizing the heat generated together with power generation are combined.

Known as the cogeneration system using the fuel cell as the power generator is a fuel cell cogeneration system which detects the misconnection of a line through which a heat medium flows (see PTL 1, for example). Fig. 30 is a schematic diagram showing a schematic configuration of the fuel cell cogeneration system disclosed in PTL 1.

As shown in Fig. 30, a fuel cell cogeneration system 101 disclosed in PTL 1 includes a fuel cell 102, a cooling water line 103, an electric heater 105 disposed at the cooling water line 103, a heat exchanger 106 configured to transfer heat of cooling water to exhaust heat recovery water, an exhaust heat recovery water line 108, a hot water tank 110, an outflow water temperature detector 113a, an inflow water temperature detector 113b, and a determining device 116.

The exhaust heat recovery water line 108 includes: a high-temperature exhaust heat recovery line 108a through which the exhaust heat recovery water is guided from the heat exchanger 106 to the hot water tank 110; and a low-temperature exhaust heat recovery line 108b through which the exhaust heat recovery water is guided from the hot water tank 110 to the heat exchanger 106.

The outflow water temperature detector 113a configured to detect the temperature of the exhaust heat recovery water flowing out from the hot water tank 110 is disposed at the low-temperature exhaust heat recovery line 108b, and the inflow water temperature detector 113b configured to detect the temperature of the exhaust heat recovery water flowing into the hot water tank 110 is disposed at the high-temperature exhaust heat recovery line 108a.

Based on the temperature detected by the outflow water temperature detector 113a, the determining device 116 determines the misconnection of the high-temperature exhaust heat recovery line 108a and the low-temperature exhaust heat recovery line 108b. Specifically, when there is the disconnection, the heated water flows through the heat exchanger 106 to the outflow water temperature detector 113a side at the time of the operation of the electric heater 105. Therefore, the temperature detected by the outflow water temperature detector 113a becomes higher than the temperature detected by the inflow water temperature detector 113b, so that the determining device 116 determines that there is the misconnection.

Further, known is a fuel cell system in which a valve is disposed at an exhaust heat recovery passage (see PTL 2, for example). Fig. 31 is a schematic diagram showing a schematic contiguration of the fuel cell system disclosed in PTL 2.

As shown in Fig. 31, a fuel cell system 201 disclosed in PTL 2 includes: a fuel cell unit 215 including a first case 204 accommodating a fuel cell 202 and a heat exchanger 203; a hot water unit 233 including a second case 205 accommodating a hot water tank 210; and an exhaust heat recovery passage 208 connecting the heat exchanger 203 and the hot water tank 210. A high-temperature maintenance valve 211a and a low-temperature maintenance valve 211b are disposed at the exhaust heat recovery passage 208 so as to be located between the first case 204 and the second case 205.

### Citation List

### Patent Literature

PTL 1: Japanese Laid-Open Patent Application Publication No. 2009-218052
PTL 2: Japanese Laid-Open Patent Application Publication No. 2012-4132

### Summary of Invention

### Technical Problem

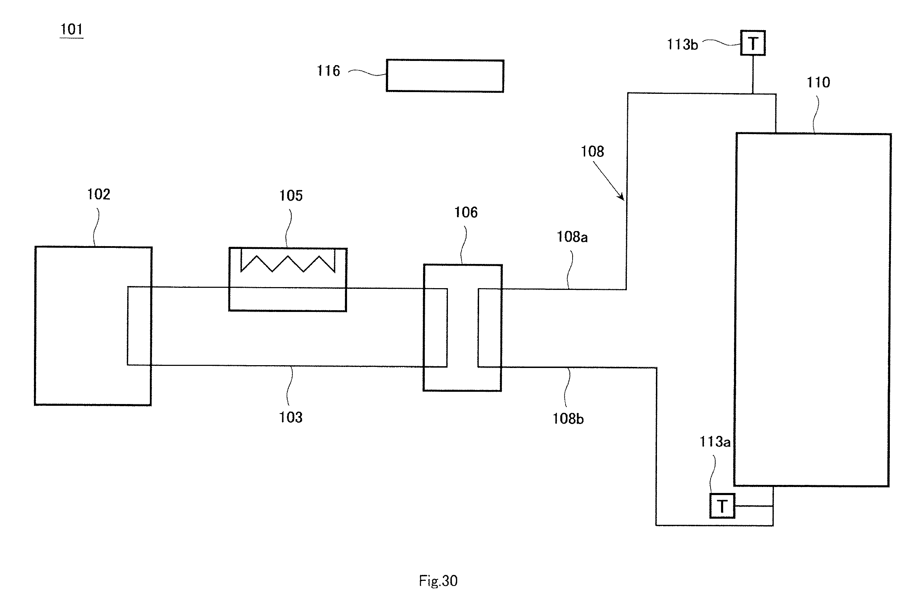

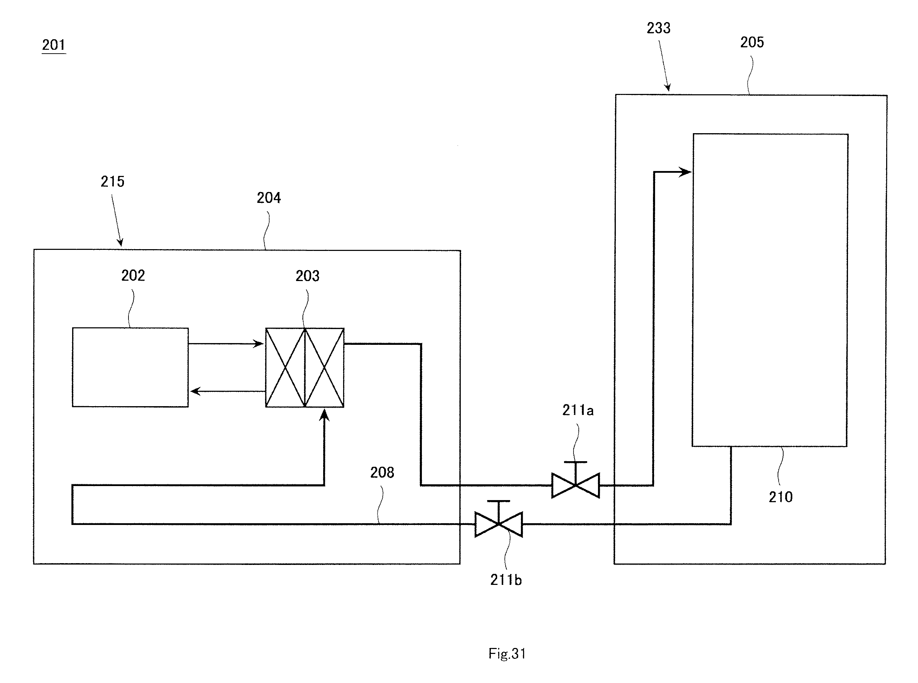

In a case where at least one of the high-temperature maintenance valve 211 a and the low-temperature maintenance valve 211b in the fuel cell system 201 shown in Fig. 31 is adopted in the fuel cell cogeneration system 101 shown in Fig. 30, the following problems occur.

For example, in a case where these valves are constituted by on-off valves, and these on-off valves are closed, the exhaust heat recovery water cannot flow through the high-temperature exhaust heat recovery line 108a and the low-temperature exhaust heat recovery line 108b. Therefore, a first problem is that since the temperature detected by the outflow water temperature detector 113a does not become higher than the temperature detected by the inflow water temperature detector 113b, the abnormality of the on-off valve cannot be detected.

Further, in a case where the high-temperature maintenance valve 211 a or the low-temperature maintenance valve 211 b is constituted by a check valve, and there is the misconnection of the high-temperature exhaust heat recovery line 108a and the low-temperature exhaust heat recovery line 108b, the exhaust heat recovery water cannot flow through the high-temperature exhaust heat recovery line 108a and the low-temperature exhaust heat recovery line 108b. Therefore, a second problem is that since the temperature detected by the outflow water temperature detector 113a does not become higher than the temperature detected by the inflow water temperature detector 113b, the determining device 116 of PTL 2 determines that there is no misconnection, although there is the misconnection of the high-temperature exhaust heat recovery line 108a and the low-temperature exhaust heat recovery line 108b.

The present invention solves at least one of the first problem and the second problem, and an object of the present invention is to provide a cogeneration system and a method of operating the cogeneration system, each of which is capable of detecting the abnormality of an on-off valve disposed at an exhaust heat recovery passage or the abnormality of a connection of a pipe constituting the exhaust heat recovery passage.

### Solution to Problem

In order to solve the above problems, a cogeneration system according to the present invention includes: a power generator configured to supply electric power and heat; a first circulation passage in which a first heat medium circulates, the first heat medium recovering the heat from the power generator; a first temperature detector disposed at the first circulation passage and configured to detect a temperature of the first heat medium; a first heater disposed at the first circulation passage and configured to heat the first heat medium; a first heat medium circulator disposed at the first circulation passage and configured to convey the first heat medium; a first tank disposed at the first circulation passage and configured to store the first heat medium; a first valve disposed at the first circulation passage; and a controller, wherein: the controller performs a first heating operation of heating the first heat medium by the first heater and activating the first heat medium circulator; and in a case where the temperature detected by the first temperature detector after the first heating operation is lower than a preset first predetermined temperature or in a case where a temperature difference between the temperatures detected by the first temperature detector before and after the first heating operation is a temperature change smaller than a preset first temperature difference, the controller determines that the cogeneration system is abnormal, informs that the cogeneration system is abnormal, or stops an operation of the cogeneration system.

With this, the abnormality of the cogeneration system, such as the abnormality of the first valve disposed at the first circulation passage or the abnormality of the connection of pipes constituting the first circulation passage, can be detected.

Further, in order to solve the above problems, a method of operating a cogeneration system according to the present invention is a method of operating a cogeneration system, the cogeneration system including: a power generator configured to supply electric power and heat; a first circulation passage in which a first heat medium circulates, the first heat medium recovering the heat from the power generator; a first temperature detector disposed at the first circulation passage and configured to detect a temperature of the first heat medium; a first heater disposed at the first circulation passage and configured to heat the first heat medium; a first heat medium circulator disposed at the first circulation passage and configured to convey the first heat medium; a first tank disposed at the first circulation passage and configured to store the first heat medium; and a first valve disposed at the first circulation passage, the method including:
(A) heating the first heat medium by the first heater and causing the first heat medium to flow from the first heater toward the first temperature detector by the first heat medium circulator; and
(B) in a case where the temperature detected by the first temperature detector after the step (A) is lower than a preset first predetermined temperature or in a case where a temperature difference between the temperatures detected by the first temperature detector before and after the step (A) is a temperature change smaller than a preset first temperature difference, determining that the cogeneration system is abnormal, informing that the cogeneration system is abnormal, or stopping an operation of the cogeneration system.

With this, the abnormality of the cogeneration system, such as the abnormality of the first valve disposed at the first circulation passage or the abnormality of the connection of the pipes constituting the first circulation passage, can be detected.

### Advantageous Effects of Invention

According to the cogeneration system and the method of operating the cogeneration system in the present invention, the abnormality of the cogeneration system, such as the abnormality of the first valve disposed at the first circulation passage or the abnormality of the connection of the pipes constituting the first circulation passage, can be detected.

### Brief Description of Drawings

Fig. 1 is a schematic diagram showing a schematic configuration of a cogeneration system (fuel cell cogeneration system) according to Embodiment I.
Fig. 2 is a flow chart showing one example of an abnormality determining operation of the fuel cell cogeneration system according to Embodiment I.
Fig. 3 is a flow chart showing another example of the abnormality determining operation of the fuel cell cogeneration system according to Embodiment I.
Fig. 4 is a schematic diagram showing a schematic configuration of the cogeneration system (fuel cell cogeneration system) of Modification Example 1 of Embodiment 1.
Fig. 5 is a flow chart showing one example of the abnormality determining operation of the fuel cell cogeneration system of Modification Example 1 of Embodiment 1.
Fig. 6 is a flow chart showing another example of the abnormality determining operation of the fuel cell cogeneration system of Modification Example 1 of Embodiment 1.
Fig. 7 is a schematic diagram showing a schematic configuration of the fuel cell cogeneration system of Modification Example 2 of Embodiment I.
Fig. 8 is a schematic diagram showing a schematic configuration of the fuel cell cogeneration system according to Embodiment 2.
Fig. 9 is a flow chart showing one example of the abnormality determining operation of the fuel cell cogeneration system according to Embodiment 2.
Fig. 10 is a flow chart showing one example of the abnormality determining operation of the fuel cell cogeneration system of Modification Example 1 of Embodiment 2.
Fig. 11 is a flow chart showing another example of the abnormality determining operation of the fuel cell cogeneration system of Modification Example 1 of Embodiment 2.
Fig. 12 is a schematic diagram showing a schematic configuration of the fuel cell cogeneration system of Modification Example 2 of Embodiment 2.
Fig. 13 is a flow chart showing one example of the abnormality determining operation of the fuel cell cogeneration system of Modification Example 2 of Embodiment 2.
Fig. 14 is a flow chart showing another example of the abnormality determining operation of the fuel cell cogeneration system of Modification Example 2 of Embodiment 2.
Fig. 15 is a schematic diagram showing a schematic configuration of the fuel cell cogeneration system according to Embodiment 3.
Fig. 16 is a flow chart showing one example of the abnormality determining operation of the fuel cell cogeneration system according to Embodiment 3.
Fig. 17 is a flow chart showing another example of the abnormality determining operation of the fuel cell cogeneration system according to Embodiment 3.
Fig. 18 is a schematic diagram showing a schematic configuration of the fuel cell cogeneration system of Modification Example 1 of Embodiment 3.
Fig. 19 is a flow chart showing one example of the abnormality determining operation of the fuel cell cogeneration system of Modification Example 1 of Embodiment 3.
Fig. 20 is a flow chart showing another example of the abnormality determining operation of the fuel cell cogeneration system of Modification Example 1 of Embodiment 3.
Fig. 21 is a schematic diagram showing a schematic configuration of the fuel cell cogeneration system according to Embodiment 4.
Fig. 22 is a schematic diagram showing a schematic configuration of the fuel cell cogeneration system according to Embodiment 4.
Fig. 23 is a flow chart showing one example of the abnormality determining operation of the fuel cell cogeneration system according to Embodiment 4.
Fig. 24 is a flow chart showing another example of the abnormality determining operation of the fuel cell cogeneration system according to Embodiment I.
Fig. 25 is a schematic diagram showing a schematic configuration of the fuel cell cogeneration system of Modification Example 1 of Embodiment 4.
Fig. 26 is a schematic diagram showing a schematic configuration of the fuel cell cogeneration system of Modification Example 1 of Embodiment 4.
Fig. 27 is a schematic diagram showing a schematic configuration of the fuel cell cogeneration system according to Embodiment 5.
Fig. 28 is a schematic diagram showing a schematic configuration of the fuel cell cogeneration system according to Embodiment 5.
Fig. 29 is a flow chart showing one example of the abnormality determining operation of the fuel cell cogeneration system according to Embodiment 5.
Fig. 30 is a schematic diagram showing a schematic configuration of the fuel cell cogeneration system disclosed in PTL I.
Fig. 31 is a schematic diagram showing a schematic configuration of the fuel cell system disclosed in PTL 2.

### Description of Embodiments

Hereinafter, preferred embodiments of the present invention will be explained in reference to the drawings. In the drawings, the same reference signs are used for the same or corresponding components, and a repetition of the same explanation is avoided. Further, in the drawings, only the components necessary to explain the present invention are shown, and the other components may not be shown. Furthermore, the present invention is not limited to the embodiments below.

### Embodiment 1

A cogeneration system according to Embodiment I includes: a power generator configured to supply electric power and heat; a first circulation passage in which a first heat medium circulates, the first heat medium recovering the heat from the power generator; a first temperature detector disposed at the first circulation passage and configured to detect a temperature of the first heat medium; a first heater disposed at the first circulation passage and configured to heat the first heat medium; a first heat medium circulator disposed at the first circulation passage and configured to convey the first heat medium; a first tank disposed at the first circulation passage and configured to store the first heat medium; a first valve disposed at the first circulation passage; and a controller, wherein: the controller performs a first heating operation of heating the first heat medium by the first heater and activating the first heat medium circulator; and in a case where the temperature detected by the first temperature detector after the first heating operation is lower than a preset first predetermined temperature or in a case where a temperature difference between the temperatures detected by the first temperature detector before and after the first heating operation is a temperature change smaller than a preset first temperature difference, the controller determines that the cogeneration system is abnormal, informs that the cogeneration system is abnormal, or stops an operation of the cogeneration system.

The cogeneration system according to Embodiment I may be configured such that: the first valve is an on-off valve; the controller performs the first heating operation; and in a case where the temperature detected by the first temperature detector after the first heating operation is lower than the first predetermined temperature or in a case where the temperature difference between the temperatures detected by the first temperature detector before and after the first heating operation is the temperature change smaller than the preset first temperature difference, the controller determines that the on-off valve is abnormal, informs that the on-off valve is abnormal, or stops the operation of the cogeneration.

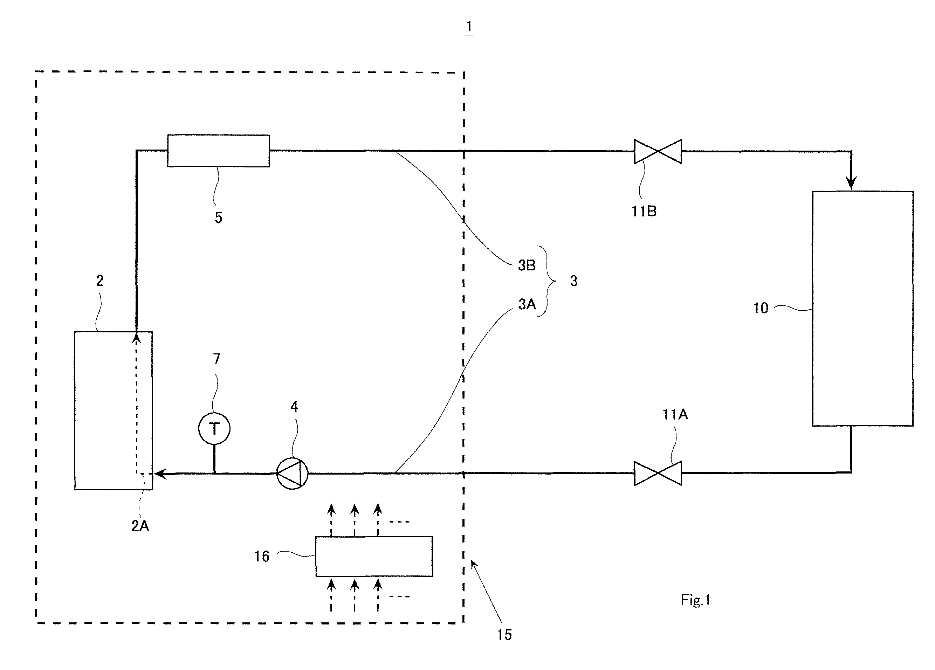

Hereinafter, one example of the cogeneration system according to Embodiment 1 will be explained in reference to Figs. 1 to 3. In the following explanations, a fuel cell cogeneration system including a fuel cell as a power generator is shown as one example of the cogeneration system. However, a gas turbine, a gas engine, a steam turbine, or the like may be used as the power generator.

### Configuration of Fuel Cell Cogeneration System

Fig. 1 is a schematic diagram showing a schematic configuration of a cogeneration system (fuel cell cogeneration system) according to Embodiment I.

As shown in Fig. 1, a fuel cell cogeneration system 1 according to Embodiment I includes a fuel cell (power generator) 2, a first circulation passage 3, a first heat medium circulator 4, a heater (first heater) 5, a first temperature detector 7, a first tank 10, a first on-off valve (first valve) 11 A, a second on-off valve (first valve) 11B, and a controller 16.

According to the fuel cell cogeneration system 1 of Embodiment 1, the fuel cell 2, a part of the first circulation passage 3, the first heat medium circulator 4, the heater 5, the first temperature detector 7, and the controller 16 are provided in a case of a fuel cell system 15. In Embodiment 1, cooling water (city water) is used as a first heat medium.

The fuel cell 2 includes an anode and a cathode (both not shown) and causes an electrochemical reaction between a fuel gas supplied to the anode and an oxidizing gas supplied to the cathode, to generate electricity and heat. The electric power generated by the fuel cell 2 is converted by an electric power converter (not shown) from DC power to AC power and is subjected to voltage adjustment to be supplied to electric power loads, such as lights and various electrical apparatuses.

Each of various fuel cells, such as polymer electrolyte fuel cells, phosphoric-acid fuel cells, and solid-oxide fuel cells, may be used as the fuel cell 2. Since the fuel cell 2 is similar in configuration to a general fuel cell, a detailed explanation thereof is omitted.

The fuel cell 2 is provided with a first heat medium channel 2A through which the first heat medium (cooling water) flows, the first heat medium (cooling water) recovering generated heat to cool down the fuel cell 2. An upstream end of a first outward route 3B is connected to an outlet port of the first heat medium channel 2A, and a downstream end of the first outward route 3B is connected to an upper portion (herein, an upper end) of the first tank 10. A downstream end of a first return route 3A is connected to an inlet port of the first heat medium channel 2A. An upstream end of the first return route 3A is connected to a lower portion of the first tank 1. The first circulation passage 3 may be regarded as being constituted by the first return route 3A and the first outward route 3B or may be regarded as being constituted by the first heat medium channel 2A, the first return route 3A, and the first outward route 3B.

The heater 5 configured to heat the first heat medium flowing through the first circulation passage 3 is disposed at the first outward route 3B. For example, an electric heater may be used as the heater 5. The first heat medium circulator 4 is disposed at the first return route 3A. The first heat medium circulator 4 is configured to cause the first heat medium to flow from the heater 5 through the first tank 10 to the first temperature detector 7. Each of various pumps, such as a plunger pump, may be used as the first heat medium circulator 4.

With this, the first heat medium having recovered the heat generated by the fuel cell 2 flows through the first outward route 3B to be supplied to the first tank 10. The first heat medium in the first tank 10 flows through the first return route 3A to be supplied to the first heat medium channel 2A. As above, the first tank 10 is a so-called lamination boiling-up tank configured such that the first heat medium whose temperature is low and close to the temperature of city water is stored in a lower portion of the tank, and the first heat medium whose temperature is high is stored in an upper portion of the tank.

The first on-off valve 11A is disposed at the first return route 3A so as to be provided upstream of the first heat medium circulator 4, and the second on-off valve 1 B is disposed at the first outward route 3B so as to be provided downstream of the heater 5. The first on-off valve 11A and the second on-off valve 11B may be on-off valves which can be manually opened and closed or may be solenoid valves or the like which are opened and closed by the controller 16. In Embodiment 1, both the first on-off valve 11A and the second on-off valve 11B are provided. However, the present embodiment is not limited to this, and at least one of the first on-off valve 11A and the second on-off valve 11B may be provided.

Further, the first temperature detector 7 is disposed at the first return route 3A so as to be provided downstream of the first heat medium circulator 4. The first temperature detector 7 is configured to output the detected temperature of the first heat medium to the controller 16.

The controller 16 may be any component as long as the controller 16 controls respective devices constituting the fuel cell cogeneration system 1. The controller 16 includes: a calculation processing portion, such as a microprocessor or a CPU; a storage portion, such as a memory, configured to store programs for executing respective control operations; and a clock portion. The controller 16 performs various control operations regarding the fuel cell cogeneration system 1 in such a manner that the calculation processing portion reads out and executes a predetermined control program stored in the storage portion.

The controller 16 may be constituted by a single controller or by a group of a plurality of controllers which cooperate to execute the control operations of the fuel cell cogeneration system 1. The controller 16 may be constituted by a microcontroller or may be constituted by a MPU, a PLC (Programmable Logic Controller), a logic circuit, or the like.

### Operations of Fuel Cell Cogeneration System

Next, an abnormality determining operation of the fuel cell cogeneration system 1 according to Embodiment 1 will be explained in reference to Figs. 1 to 3. Since a general operation (power generating operation) of the fuel cell cogeneration system 1 is executed in the same manner as the general operation of a publicly known fuel cell cogeneration system, an explanation thereof is omitted. The abnormality determining operation of the fuel cell cogeneration system may be executed at the time of a trial operation after the construction of the fuel cell cogeneration system or after the maintenance of the fuel cell cogeneration system.

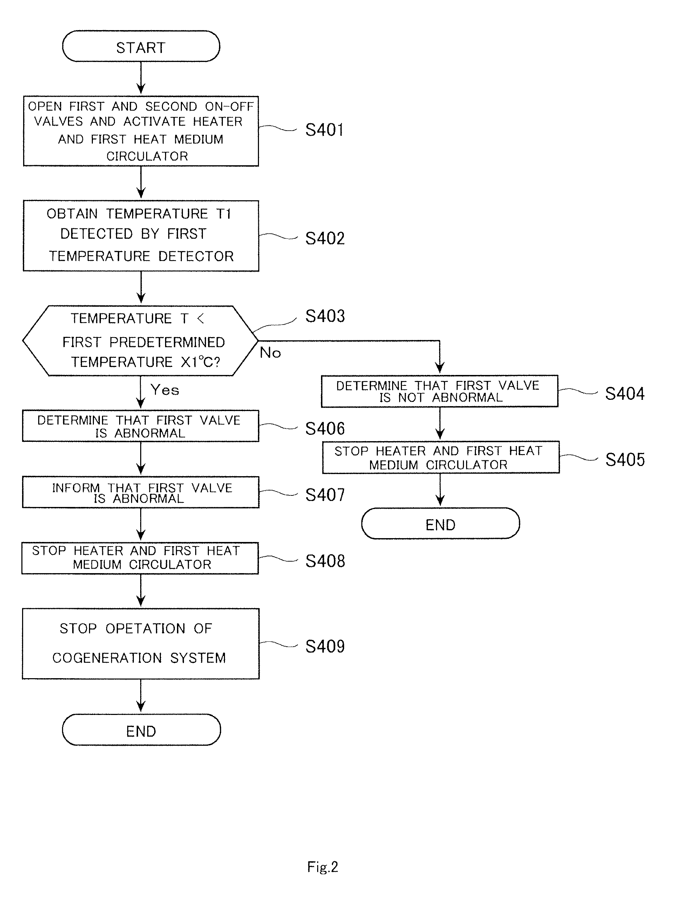

Fig. 2 is a flow chart showing one example of the abnormality determining operation of the fuel cell cogeneration system according to Embodiment 1.

As shown in Fig. 2, the controller 16 opens the first on-off valve 11A and the second on-off valve 11 B and activates the heater 5 and the first heat medium circulator 4 (Step S401) to execute a first heating operation. With this, the first heat medium is heated. It should be noted that the first on-off valve 11A and the second on-off valve 11B may be manually opened by a user, a maintenance worker, or the like.

Next, after a predetermined time t1 (five minutes, for example), the controller 16 obtains a temperature T of the first heat medium detected by the first temperature detector 7 (Step S402) and determines whether or not the temperature T obtained in Step S402 is lower than a first predetermined temperature X1°C (Step S403).

The predetermined time t1 may be set based on the detected amount of heat of the first heat medium stored in the first tank 10. A correspondence relation between the predetermined time t1 and the amount of heat can be obtained in advance by experiments and can be stored in the storage portion of the controller 16.

Specifically, for example, in a case where the amount of heat of the first heat medium stored in the first tank 10 is large, the predetermined time t1 may be set to be short, and in a case where the amount of heat of the first heat medium stored in the first tank 10 is small, the predetermined time t1 may be set to be long.

For example, when the temperature of the first heat medium (water, for example) in the first tank 10 is assumed to be substantially the same as an outside air temperature or the temperature of tap water, such as when in the trial operation of the fuel cell cogeneration system 1, the predetermined time t1 may be preset based on the volume of the first tank 10. More specifically, in a case where the volume of the first tank 10 is large, the predetermined time t1 may be set to be long, and in a case where the volume of the first tank 10 is small, the predetermined time t1 may be set to be short. In this case, the flow direction of the first heat medium flowing through the first return route 3A and the first outward route 3B may be any direction.

In order to prevent the misdetection, the first predetermined temperature X1°C may be set based on the amount of heat of the first heat medium stored in the first tank 10. For example, the first predetermined temperature X 1°C may be set to an arbitrary temperature (45 to 50°C, for example) higher than a highest temperature (40 to 45°C, for example) of the first heat medium increased in temperature by air temperature under a circumstance where the fuel cell cogeneration system 1 is provided.

For example, in a case where the first tank 10 is the lamination boiling-up tank, the first predetermined temperature X1 °C may be set to an arbitrary temperature higher than the highest temperature of the first heat medium supplied from the lower portion of the first tank 10 to the first circulation passage 3.

When the first on-off valve 11 A and the second on-off valve 11 B are normal, the first heat medium flows through the first circulation passage 3 (including the first heat medium channel 2A), so that the temperature detected by the first temperature detector 7 becomes high by the first heat medium heated by the heater 5. In contrast, when at least one of the first on-off valve 11A and the second on-off valve 11B is abnormal, the first heat medium does not flow through the first circulation passage 3 (including the first heat medium channel 2A), so that the temperature detected by the first temperature detector 7 does not become high.

Therefore, in a case where the temperature T is not lower than the first predetermined temperature X1°C (i.e., in a case where the temperature T is the first predetermined temperature X1°C or higher) (No in Step S403), the controller 16 determines that the first on-off valve 11A and the second on-off valve 11B are not abnormal (the fuel cell cogeneration system 1 is not abnormal) (Step S404). Then, the controller 16 stops the heater 5 and the first heat medium circulator 4 (Step S405) and terminates the program.

In contrast, in a case where the temperature T is lower than the first predetermined temperature X1°C (Yes in Step S403), the controller 16 determines that at least one of the first on-off valve 11A and the second on-off valve 11B is abnormal, that is, the first valve (the fuel cell cogeneration system 1) is abnormal (Step S406). Then, the controller 16 informs that at least one of the first on-off valve 11A and the second on-off valve 11B is abnormal (the first valve is abnormal) (Step S407).

This informing operation may be any operation as long as the abnormality of the on-off valve (the cogeneration system) can be informed to the outside. Examples of the method of informing the abnormality to the outside include: a method of displaying character data or image data on a display portion (screen) of a remote controller of the fuel cell cogeneration system 1; a method of informing the abnormality by sound using a speaker or the like; and a method of informing the abnormality by light or color. Another example is a method of informing the abnormality by email or an application through a communication network to a smartphone, a mobile phone, a tablet computer, or the like.

Next, the controller 16 stops the heater 5 and the first heat medium circulator 4 (Step S408), stops the operation of the fuel cell cogeneration system 1 (Step S409), and terminates the program. It should be noted that he controller 16 does not have to execute Step S407.

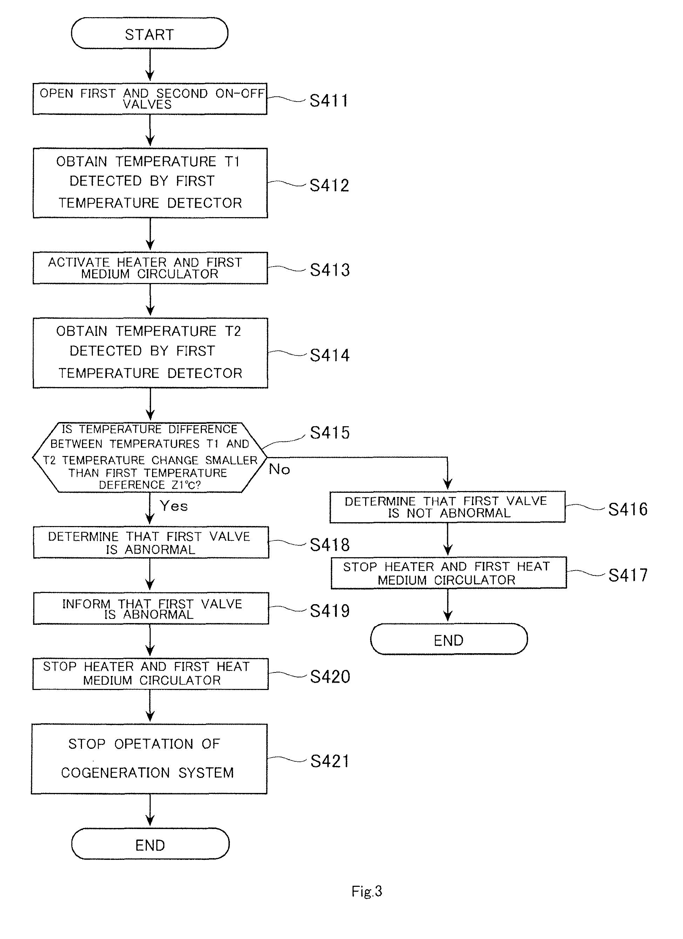

Fig. 3 is a flow chart showing another example of the abnormality determining operation of the fuel cell cogeneration system according to Embodiment 1.

As shown in Fig. 3, the controller 16 opens the first on-off valve 11 A and the second on-off valve 11B (Step S411) and obtains a temperature T1 of the first heat medium detected by the first temperature detector 7 (Step S412). Next, the controller 16 activates the heater 5 and the first heat medium circulator 4 (Step S413) to execute the first heating operation. With this, the first heat medium is heated.

Next, after the predetermined time t1 (five minutes, for example), the controller 16 obtains a temperature T2 of the first heat medium detected by the first temperature detector 7 (Step S414). The controller 16 determines whether or not a temperature difference between the temperature T1 obtained in Step S412 and the temperature T2 obtained in Step S414 is a temperature change smaller than a first temperature difference Z1°C (Step S415).

The first temperature difference Z1 °C can be preset arbitrarily based on the operation amounts of the first heat medium circulator 4 and the heater 5, the amount of heat of the first heat medium stored in the first tank 10, and the like or by experiments. For example, the first temperature difference Z1°C may be set to 10°C.

As described above, in a case where the first on-off valve 11A and the second on-off valve 11B are normal, the temperature detected by the first temperature detector 7 becomes high, so that the temperature difference between the temperatures T1 and T2 increases to become not smaller than the first temperature difference Z1°C. In contrast, in a case where at least one of the first on-off valve 11A and the second on-off valve 11B is abnormal, the temperature difference between the temperatures T1 and T2 becomes the temperature change smaller than the first temperature difference Z1°C.

Therefore, in a case where the temperature difference between the temperatures T1 and T2 is not the temperature change smaller than the first temperature difference Z1°C (i.e., the temperature difference between the temperatures T1 and T2 increases to become not smaller than the first temperature difference Z1°C) (No in Step S415), the controller 16 determines that the first on-off valve 11A and the second on-off valve 11B are not abnormal (the first valve is not abnormal) (Step S416). Then, the controller 16 stops the heater 5 and the first heat medium circulator 4 (Step S417) and terminates the program.

In contrast, in a case where the temperature difference between the temperatures T1 and T2 is the temperature change smaller than the first temperature difference Z1°C (Yes in Step S415), the controller 16 determines that at least one of the first on-off valve 11A and the second on-off valve 11B is abnormal (the first valve is abnormal) (Step S418). Then, the controller 16 informs that at least one of the first on-off valve 11A and the second on-off valve 11B is abnormal (Step S419).

Next, the controller 16 stops the heater 5 and the first heat medium circulator 4 (Step S420), stops the operation of the fuel cell cogeneration system 1 (Step S421), and terminates the program. It should be noted that the controller 16 does not have to execute Step S419.

The fuel cell cogeneration system 1 according to Embodiment 1 configured as above can detect the abnormality of the fuel cell cogeneration system 1, that is, the abnormality of at least one of the first on-off valve 11A and the second on-off valve 11B disposed at the first circulation passage 3 (the abnormality of the first valve).

Embodiment 1 adopts a case where the first temperature detector 7 is disposed at the first return route 3A. However, the present embodiment is not limited to this and may adopt a case where the first temperature detector 7 is disposed at the first outward route 3B. Further, the present embodiment adopts a case where the heater 5 is disposed at the first outward route 3B. However, the present embodiment is not limited to this and may adopt a case where the heater 5 is disposed at the first return route 3A.

It is preferable that in a case where the first temperature detector 7 is disposed at the first outward route 3B, the first temperature detector 7 be provided downstream of the heater 5.

It is preferable that in a case where the heater 5 is disposed at the first return route 3A, the first temperature detector 7 be disposed at the first return route 3A so as to be provided downstream of the heater 5. In these cases, when the first heating operation is executed, the first temperature detector 7 detects the temperature of the first heat medium heated by the heater 5 before the first heat medium flows through the first tank 10. Therefore, the temperature change of the first heat medium becomes more significant.

Thus, the predetermined time t1 until the temperature T1 detected by the first temperature detector is obtained in Step S402 can be shortened. With this, a time it takes to perform the abnormality determining operation of the fuel cell cogeneration system 1 can be shortened.

Before the first heat medium heated by the heater 5 flows through the first tank 10, the first temperature detector 7 detects the temperature of the first heat medium. Therefore, the predetermined time t1 can be set regardless of the amount of heat of the hot water stored in the first tank 10.

### Modification Example 1

Next, Modification Example of the fuel cell cogeneration system I according to Embodiment 1 will be explained.

The fuel cell cogeneration system of Modification Example 1 of Embodiment 1 further includes a bypass passage connecting the first outward route through which the first heat medium having recovered the heat from the power generator flows toward the first tank and a first return route through which the first heat medium flows from the first tank toward the power generator, wherein the first valve is configured to switch a destination to which the first heat medium in the first outward route flows, between the first tank and the bypass passage.

### Configuration of Fuel Cell Cogeneration System

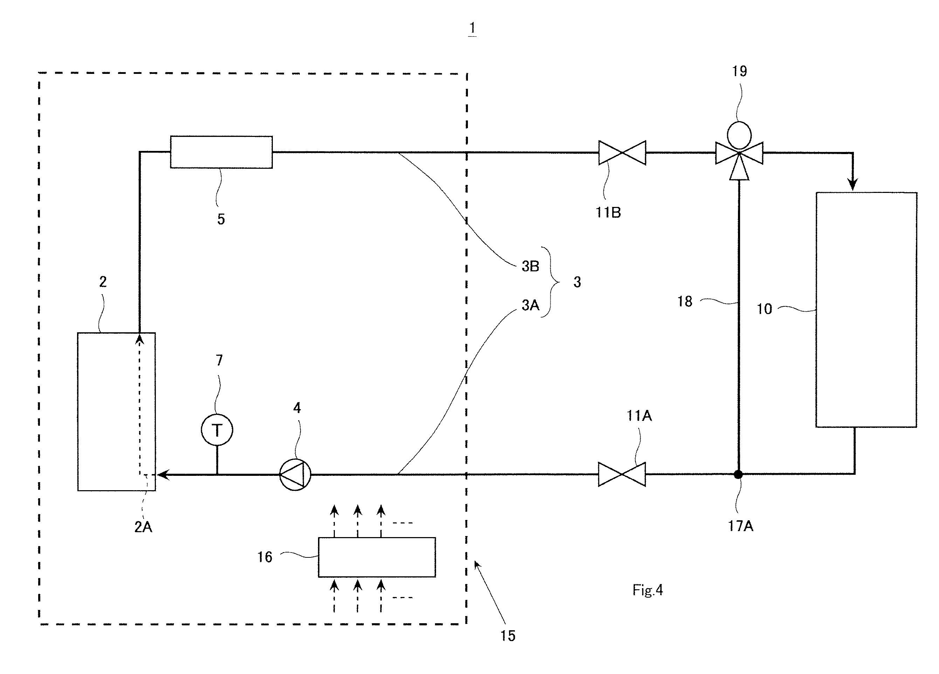

Fig. 4 is a schematic diagram showing a schematic configuration of the fuel cell cogeneration system of Modification Example 1 of Embodiment 1.

As shown in Fig. 4, the fuel cell cogeneration system 1 of Modification Example 1 of Embodiment 1 is different from the fuel cell cogeneration system 1 of Embodiment 1 in that the fuel cell cogeneration system 1 of Modification Example 1 of Embodiment 1 includes: a bypass passage 18 connecting the first return route 3A and the first outward route 3B; and a three-way valve 19 disposed at a portion where the first outward route 3B and the bypass passage 18 are connected to each other.

In Modification Example 1, the first on-off valve 11A is disposed at the first return route 3 A so as to be provided downstream of a connecting point 17A to which the bypass passage 18 is connected, and the second on-off valve 11B is disposed at the first outward route 3B so as to be provided upstream of a connecting point to which the bypass passage 18 is connected (i.e., a portion where the three-way valve 19 is provided).

Then, the controller 16 controls the three-way valve 19 such that the destination to which the first heat medium in a portion, provided upstream of the three-way valve 19, of the first outward route 3B flows is switched between the first tank 10 side and the bypass passage 18 side. In Modification Example 1, the first valve is constituted by the first on-off valve 11A, the second on-off valve 11B, and the three-way valve 19.

### Operations of Fuel Cell Cogeneration System

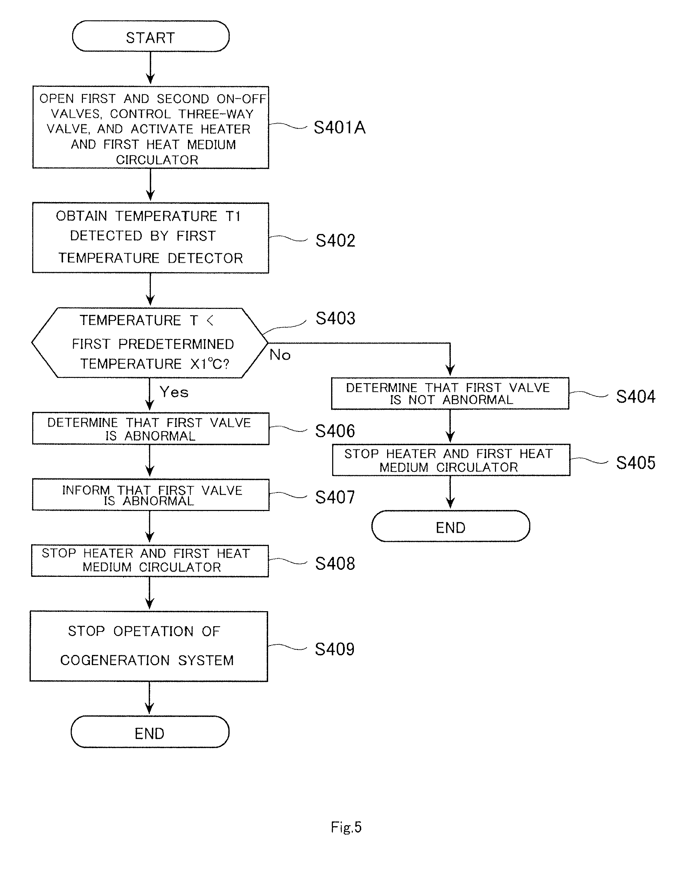

Fig. 5 is a flow chart showing one example of the abnormality determining operation of the fuel cell cogeneration system of Modification Example 1 of Embodiment 1.

As shown in Fig. 5, the abnormality determining operation of the fuel cell cogeneration system 1 of Modification Example 1 is basically the same as the abnormality determining operation of the fuel cell cogeneration system 1 of Embodiment 1 shown in Fig. 2 but is different from the abnormality determining operation of the fuel cell cogeneration system 1 of Embodiment 1 in that Step S401 A is executed instead of Step S401. Specifically, in Step S401A, the controller 16 opens the first on-off valve 11A and the second on-off valve 11 B, causes the three-way valve 19 to switch the destination, to which the first heat medium in the portion, provided upstream of the three-way valve 19, of the first outward route 3B flows, to the bypass passage 18 side, and activates the heater 5 and the first heat medium circulator 4. Thus, a fourth heating operation is executed.

With this, in a case where the first on-off valve 11A, the second on-off valve 11 B, and the three-way valve 19 are normal, the first heat medium flows from the first outward route 3B through the bypass passage 18 to the first return route 3A and does not flow through the first tank 10. Therefore, the temperature change of the first heat medium heated by the heater 5 becomes significant. On this account, the predetermined time t1 can be set to be short.

Since the first heat medium heated by the heater 5 does not flow through the first tank 10, the predetermined time t1 can be set regardless of the amount of heat of the first heat medium stored in the first tank 10.

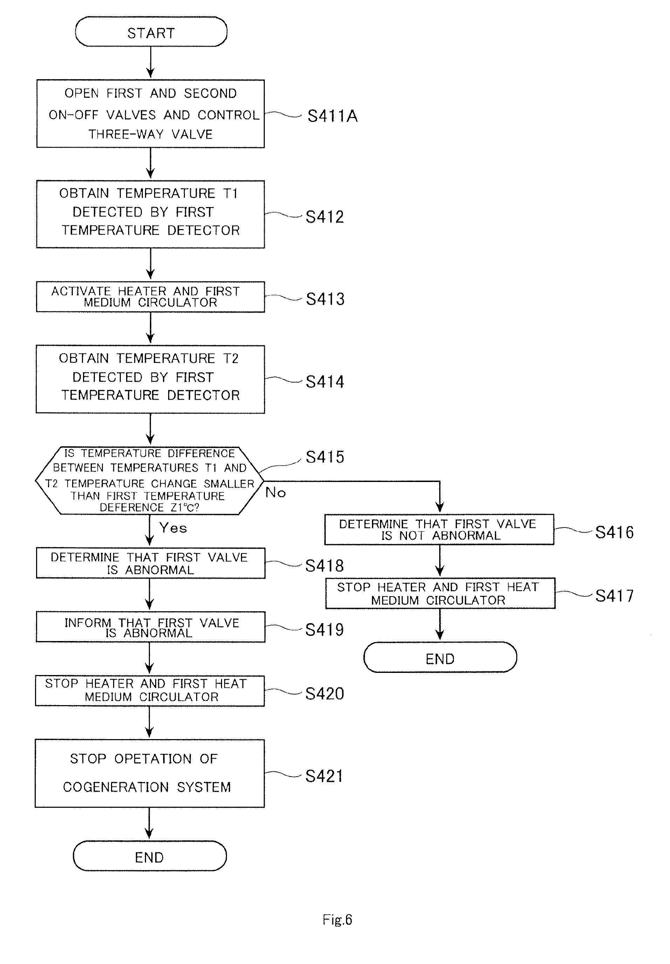

Fig. 6 is a flow chart showing another example of the abnormality determining operation of the fuel cell cogeneration system of Modification Example 1 of Embodiment 1.

As shown in Fig. 6, the abnormality determining operation of the fuel cell cogeneration system 1 of Modification Example 1 is basically the same as the abnormality determining operation of the fuel cell cogeneration system 1 of Embodiment 1 shown in Fig. 3 but is different from the abnormality determining operation of the fuel cell cogeneration system 1 of Embodiment 1 in that Step S411A is executed instead of Step S411. Specifically, in Step S411A, the controller 16 opens the first on-off valve 11A and the second on-off valve 11B and causes the three-way valve 19 to switch the destination, to which the first heat medium in the portion, provided upstream of the three-way valve 19, of the first outward route 3B flows, to the bypass passage 18 side.

With this, in a case where the first on-off valve 11 A, the second on-off valve 11 B, and the three-way valve 19 are normal (i.e., the first valve is normal), and the heater 5 and the first heat medium circulator 4 are activated in Step S413, the first heat medium flows from the first outward route 3B through the bypass passage 18 to the first return route 3A and does not flow through the first tank 10. Therefore, the temperature change of the first heat medium heated by the heater 5 becomes significant. On this account, the predetermined time t1 can be set to be short.

Since the first heat medium heated by the heater 5 does not flow through the first tank 10, the predetermined time t1 can be set regardless of the amount of heat of the first heat medium stored in the first tank 10.

The fuel cell cogeneration system 1 of Modification Example configured as above also has the same operational advantages as the fuel cell cogeneration system 1 of Embodiment 1. According to the fuel cell cogeneration system 1 of Modification Example 1, an execution time of the abnormality determining operation can be made shorter than that of the fuel cell cogeneration system 1 of Embodiment 1, so that whether the first valve is normal or abnormal can be determined quickly.

Modification Example 1 adopts a case where in Step S401A or Step S411A, the first on-off valve 11 A and the second on-off valve 11B are closed, and the three-way valve 19 is caused to switch the destination to which the first heat medium in the portion, provided upstream of the three-way valve 19, of the first outward route 3B flows, to the bypass passage 18 side. However, the present modification example is not limited to this and may adopt a case where the first on-off valve 11A and the second on-off valve 11B are opened, and the three-way valve 19 is caused to switch the destination to which the first heat medium in the portion, provided upstream of the three-way valve 19, of the first outward route 3B flows, to the first tank 10 side. In this case, the predetermined time t1 is set in the same manner as Embodiment 1.

### Modification Example 2

The fuel cell cogeneration system of Modification Example 2 of Embodiment 1 further includes: an exhaust gas passage through which an exhaust gas discharged from the power generator flows; and a heat exchanger configured to perform heat exchange between the first heat medium flowing through the first circulation passage and the exhaust gas flowing through the exhaust gas passage, wherein the first heat medium circulator causes the first heat medium to flow from the first heater through the heat exchanger toward the first temperature detector.

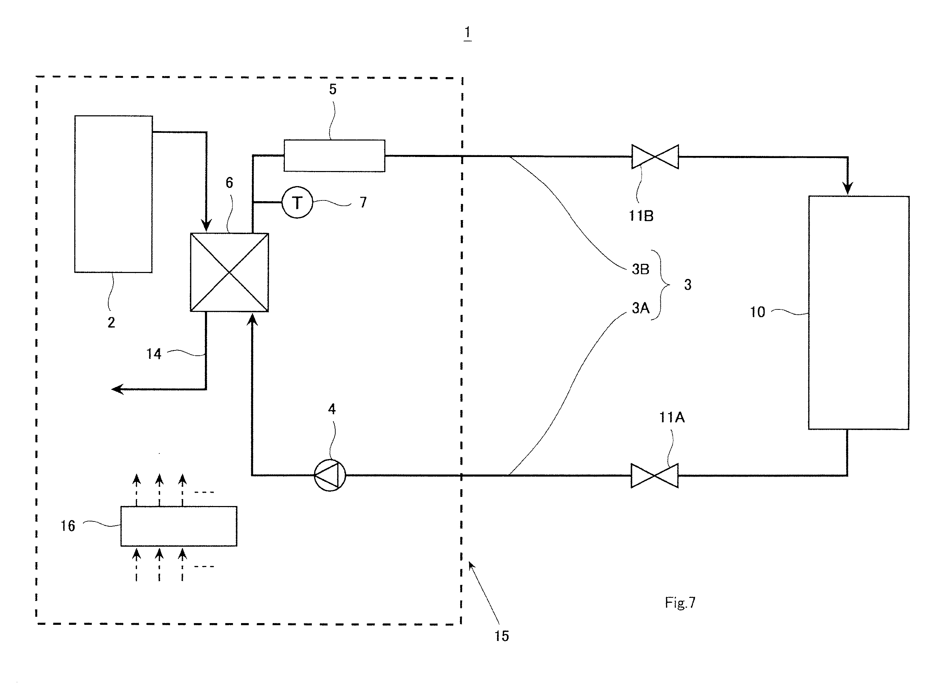

Fig. 7 is a schematic diagram showing a schematic configuration of the fuel cell cogeneration system of Modification Example 2 of Embodiment 1.

As shown in Fig. 7, the fuel cell cogeneration system 1 of Modification Example 2 is basically the same in configuration as the fuel cell cogeneration system 1 of Embodiment 1 but is different from the fuel cell cogeneration system 1 of Embodiment 1 in that the fuel cell cogeneration system 1 of Modification Example 2 further includes an exhaust gas passage 14 and a heat exchanger 6.

Specifically, the exhaust gas passage 14 is configured such that the high-temperature exhaust gas discharged from the fuel cell 2 flows therethrough. In Modification Example 1, the fuel cell 2 may be constituted by a solid-oxide fuel cell (SOFC), a molten carbonate type fuel cell (MCFC), or the like, which discharges the high-temperature (for example, several hundred degrees centigrade) exhaust gas.

The heat exchanger 6 is disposed at a portion of the exhaust gas passage 14 (to be precise, a primary channel of the heat exchanger 6 is interposed in the exhaust gas passage 14). The first circulation passage 3 is connected to a secondary channel of the heat exchanger 6. More particularly, the downstream end of the first return route 3A is connected to an upstream end of the secondary channel of the heat exchanger 6, and the upstream end of the first outward route 3B is connected to a downstream end of the secondary channel of the heat exchanger 6. With this, the heat exchanger 6 can perform the heat exchange between the exhaust gas flowing through the exhaust gas passage 14 and the first heat medium (water, for example) flowing through the first circulation passage 3.

Further, in Modification Example 1, the first heat medium circulator 4 is configured to cause the first heat medium to flow from the first heater 5 through the first tank 10 and the heat exchanger 6 toward the first temperature detector 7.

The fuel cell cogeneration system 1 of Modification Example 2 configured as above also has the same operational advantages as the fuel cell cogeneration system 1 of Embodiment 1.

### Embodiment 2

A fuel cell cogeneration system according to Embodiment 2 further includes: a second circulation passage in which a second heat medium circulates; a second heat medium circulator disposed at the second circulation passage and configured to convey the second heat medium; a second tank disposed at the second circulation passage and configured to store the second heat medium; and a heat exchanger configured to perform heat exchange between the first heat medium flowing through the first circulation passage and the second heat medium flowing through the second circulation passage, wherein: the first valve is an on-off valve disposed at the second circulation passage; the first heat medium circulator is configured to cause the first heat medium to flow from the first heater through the heat exchanger toward the first temperature detector; the controller performs the first heating operation; in a case where the temperature detected by the first temperature detector after the first heating operation becomes not lower than a preset second predetermined temperature, the controller activates the second heat medium circulator; and in a case where the temperature difference between the temperatures detected by the first temperature detector before and after the activation of the second heat medium circulator increases to become not smaller than a preset second temperature difference, the controller determines that the on-off valve is abnormal, informs that the on-off valve is abnormal, or stops an operation of the cogeneration.

### Configuration of Fuel Cell Cogeneration System

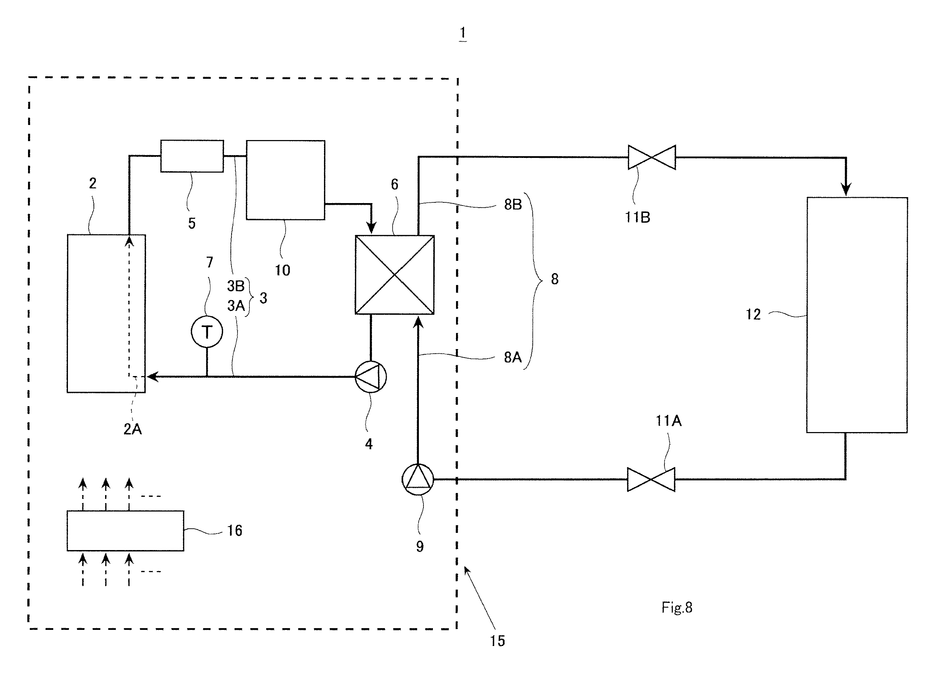

Fig. 8 is a schematic diagram showing a schematic configuration of the fuel cell cogeneration system according to Embodiment 2.

As shown in Fig. 8, the fuel cell cogeneration system 1 according to Embodiment 2 is basically the same in configuration as the fuel cell cogeneration system 1 according to Embodiment 1 but is different from the fuel cell cogeneration system 1 according to Embodiment 1 in that: the fuel cell cogeneration system 1 according to Embodiment 2 includes the heat exchanger 6, a second circulation passage (exhaust heat recovery passage) 8, a second heat medium circulator (exhaust heat recovery water pump) 9, and a second tank 12; and the first on-off valve 11A and the second on-off valve 11B are disposed at the second circulation passage 8.

Specifically, the heat exchanger 6 is disposed at a portion of the first circulation passage 3 such that the primary channel thereof is interposed in the first circulation passage 3. More particularly, the heat exchanger 6 is disposed at a portion of the first return route 3A and is provided upstream of the first heat medium circulator 4. The first heat medium circulator 4 is configured to cause the first heat medium to flow from the heater 5 through the first tank 10 and the heat exchanger 6 toward the first temperature detector 7.

Embodiment 2 adopts a case where the heat exchanger 6 is disposed at the first return route 3A (in other words, the first tank 10 is provided upstream of the heat exchanger 6). However, the present embodiment is not limited to this and may adopt a case where the heat exchanger 6 is disposed at the first outward route 3B. In this case, the heat exchanger 6 may be provided between the heater 5 and the first tank 10.

The secondary channel of the heat exchanger 6 is connected to the second circulation passage 8. More particularly, a downstream end of a second outward route 8A of the second circulation passage 8 is connected to the upstream end of the secondary channel of the heat exchanger 6, and an upstream end of a second return route 8B of the second circulation passage 8 is connected to the downstream end of the secondary channel of the heat exchanger 6. An upstream end of the second outward route 8A is connected to a lower portion of the second tank 12, and a downstream end of the second return route 8B is connected to an upper portion of the second tank 12.

The second heat medium circulator 9 is disposed at a portion of the second outward route 8A. The second heat medium circulator 9 is configured to cause a second heat medium (for example, exhaust heat recovery water (city water)) to flow through the second circulation passage 8. Each of various pumps, such as a plunger pump, may be used as the second heat medium circulator 9.

With this, when the first heat medium circulator 4, the heater 5, and the second heat medium circulator 9 are activated, the first heat medium heated by the heater 5 is supplied to the heat exchanger 6 and can perform the heat exchange with the second heat medium flowing through the second circulation passage 8.

Further, the first on-off valve 11A is disposed at a portion of the second outward route 8A so as to be provided upstream of the second heat medium circulator 9. The second on-off valve 11B is disposed at a portion of the second return route 8B.

The first temperature detector 7 may be disposed at the first outward route 3B so as to be provided upstream of the heater 5.

### Operations of Fuel Cell Cogeneration System

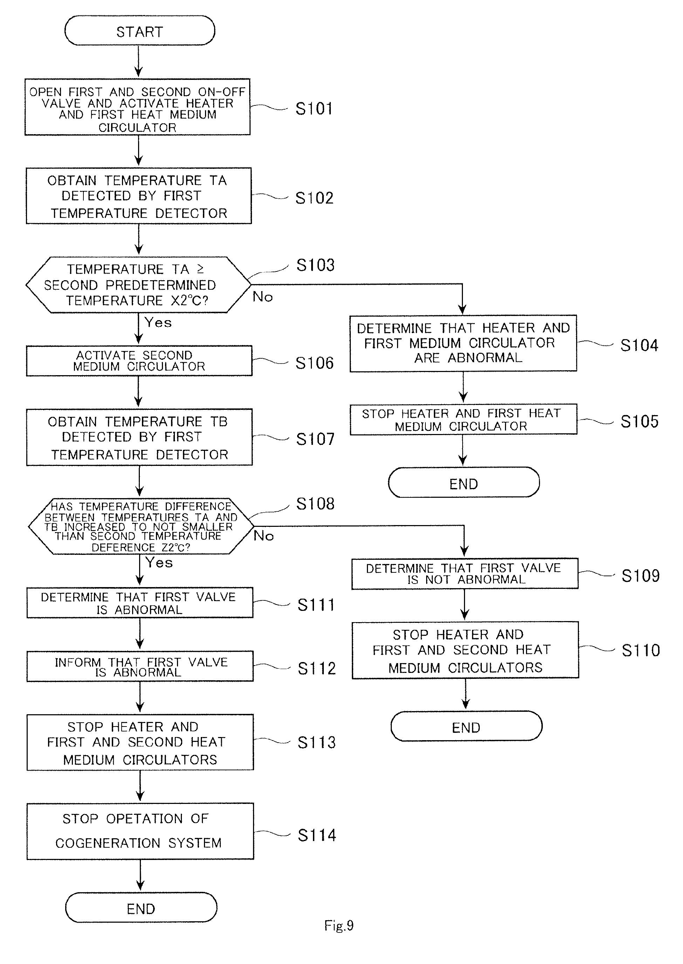

Fig. 9 is a flow chart showing one example of the abnormality determining operation of the fuel cell cogeneration system according to Embodiment 2.

As shown in Fig. 9, the controller 16 opens the first on-off valve 11A and the second on-off valve 11B and activates the heater 5 and the first heat medium circulator 4 (Step S101) to execute the first heating operation. Thus, the first heat medium is heated. It should be noted that the first on-off valve 11A and the second on-off valve 11B may be manually opened by a user, a maintenance worker, or the like.

Next, after the predetermined time t1 (five minutes, for example), the controller 16 obtains a temperature TA of the first heat medium detected by the first temperature detector 7 (Step S102) and determines whether or not the temperature TA obtained in Step S102 is not lower than a second predetermined temperature X2°C (Step S103).

In order to prevent the misdetection, the second predetermined temperature X2°C may be set based on the amount of heat of the first heat medium stored in the first tank 10. For example, the second predetermined temperature X2°C may be set to an arbitrary temperature (45 to 50°C, for example) higher than the highest temperature (40 to 45°C, for example) of the first heat medium increased in temperature by air temperature under a circumstance where the fuel cell cogeneration system 1 is provided.

Next, in a case where the temperature TA is lower than the second predetermined temperature X2°C (No in Step S103), the controller 16 determines that at least one of the heater 5 and the first heat medium circulator 4 is abnormal (Step S104). Then, the controller 16 stops the heater 5 and the first heat medium circulator 4 and terminates the program (Step S105).

In contrast, in a case where the temperature TA is not lower than the second predetermined temperature X2°C (Yes in Step S103), the controller 16 activates the second heat medium circulator 9 (Step S106). After a predetermined time t2 (ten minutes, for example) from the activation of the second heat medium circulator 9, the controller 16 obtains a temperature TB of the first heat medium detected by the first temperature detector 7 (Step S107).

The predetermined time t2 may be set based on the detected amount of heat of the first heat medium stored in the first tank 10 and the detected amount of heat of the second heat medium stored in the second tank 12. A correspondence relation among the predetermined time t2 and the amounts of heat can be obtained in advance by experiments and can be stored in the storage portion of the controller 16.

Specifically, for example, in a case where the amount of heat of the first heat medium stored in the first tank 10 is large, and the amount of heat of the second heat medium stored in the second tank 12 is small, the predetermined time t2 may be set to be short, and in a case where the amount of heat of the first heat medium stored in the first tank 10 is small, and the amount of heat of the second heat medium stored in the second tank 12 is large, the predetermined time t2 may be set to be long.

For example, when each of the temperature of the first heat medium (water, for example) in the first tank 10 and the temperature of the second heat medium (water, for example) in the second tank 12 is assumed to be substantially the same as the outside air temperature or the temperature of the tap water, such as when in the trial operation of the fuel cell cogeneration system 1, the predetermined time t2 may be preset based on the volume of the first tank 10. More specifically, in a case where the volume of the first tank 10 is large, the predetermined time t2 may be set to be long, and in a case where the volume of the first tank 10 is small, the predetermined time t2 may be set to be short. In this case, the flow direction of the first heat medium flowing through the first return route 3A and the first outward route 3B may be any direction. In addition, the flow direction of the second heat medium flowing through the second outward route 8A and the second return route 8B may be any direction.

Next, the controller 16 determines whether or not the temperature difference between the temperature TA obtained in Step S102 and the temperature TB obtained in Step S107 increases to become not smaller than a second temperature difference Z2°C (Step S108).

The second temperature difference Z2°C can be preset arbitrarily based on the operation amounts of the first heat medium circulator 4 and the heater 5, the amount of heat of the first heat medium stored in the first tank 10, and the like or by experiments. For example, the second temperature difference Z2°C may be set to 10°C.

In a case where the first on-off valve 11 A and the second on-off valve 11B are normal, the second heat medium flows through the second circulation passage 8 by activating the second heat medium circulator 9. With this, the first heat medium heated by the heater 5 performs the heat exchange in the heat exchanger 6 with the second heat medium flowing through the second circulation passage 8 to be cooled down. Thus, the temperature detected by the first temperature detector 7 becomes low.

In contrast, in a case where at least one of the first on-off valve 11A and the second on-off valve 11B is abnormal, the second heat medium does not flow through the second circulation passage 8, so that the heat exchange is not performed in the heat exchanger 6, and the temperature detected by the first temperature detector 7 becomes high.

Therefore, in a case where the temperature difference between the temperatures TA and TB does not increase to not smaller than the second temperature difference Z2°C (i.e., in a case where the temperature difference between the temperatures TA and TB decreases) (No in Step S108), the controller 16 determines that the first on-off valve 11A and the second on-off valve 11B are not abnormal (the first valve is not abnormal) (Step S109), stops the heater 5, the first heat medium circulator 4, and the second heat medium circulator 9 (Step S110), and terminates the program.

In contrast, in a case where the temperature difference between the temperatures TA and TB is not smaller than the second temperature difference Z2°C (Yes in Step S108), the controller 16 determines that at least one of the first on-off valve 11 A and the second on-off valve 11B is abnormal (the first valve is abnormal) (Step S111). Then, the controller 16 informs that at least one of the first on-off valve 11A and the second on-off valve 11B is abnormal (Step S112).

Next, the controller 16 stops the heater 5, the first heat medium circulator 4, and the second heat medium circulator 9 (Step S113), stops the operation of the fuel cell cogeneration system 1 (Step S114), and terminates the program. It should be noted that the controller 16 does not have to execute Step S112.

The fuel cell cogeneration system 1 according to Embodiment 2 configured as above also has the same operational advantages as the fuel cell cogeneration system 1 according to Embodiment 1.

### Modification Example 1

Next, Modification Example of the fuel cell cogeneration system 1 according to Embodiment 2 will be explained.

The fuel cell cogeneration system of Modification Example 1 of Embodiment 2 further includes: a second circulation passage in which a second heat medium circulates; a second heat medium circulator disposed at the second circulation passage and configured to convey the second heat medium; a second tank disposed at the second circulation passage and configured to store the second heat medium; and a heat exchanger configured to perform heat exchange between the first heat medium flowing through the first circulation passage and the second heat medium flowing through the second circulation passage, wherein: the first valve is an on-off valve disposed at the second circulation passage; the first heat medium circulator is configured to cause the first heat medium to flow from the first heater through the heat exchanger toward the first temperature detector; the controller executes the first heating operation and activates the second heat medium circulator; and in a case where the temperature detected by the first temperature detector after the activation of the second heat medium circulator is not lower than a preset third predetermined temperature or in a case where the temperature difference between the temperatures detected by the first temperature detector before and after the activation of the second heat medium circulator increases to become not smaller than a preset third temperature difference, the controller determines that the on-off valve is abnormal, informs that the on-off valve is abnormal, or stops the operation of the cogeneration.

Since the fuel cell cogeneration system 1 of Modification Example 1 of Embodiment 2 is the same in configuration as the fuel cell cogeneration system 1 of Embodiment 2, a detailed explanation of the configuration thereof is omitted.

### Operations of Fuel Cell Cogeneration System

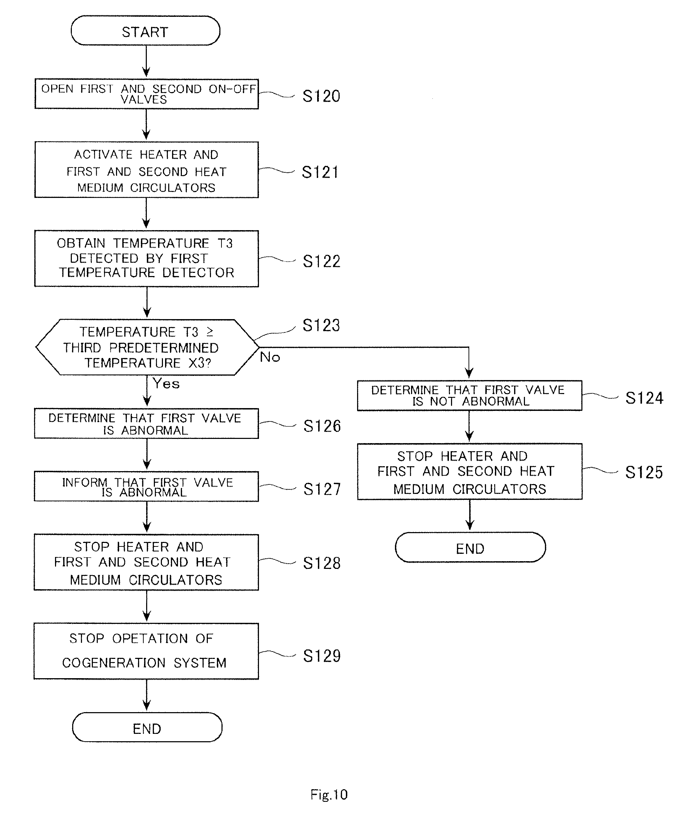

Fig. 10 is a flow chart showing one example of the abnormality determining operation of the fuel cell cogeneration system of Modification Example 1 of Embodiment 2.

As shown in Fig. 10, the controller 16 opens the first on-off valve 11A and the second on-off valve 11B (Step S120). Next, the controller 16 activates the heater 5, the first heat medium circulator 4, and the second heat medium circulator 9 (Step S121), that is, the controller 16 activates the second heat medium circulator 9 at the same time as the execution of the first heating operation.

Next, after a predetermined time t3 (ten minutes, for example), the controller 16 obtains a temperature T3 of the first heat medium detected by the first temperature detector 7 (Step S122) and determines whether or not the temperature T3 obtained in Step S122 is not lower than a third predetermined temperature X3°C (Step S123).

The predetermined time t3 may be set based on the detected amount of heat of the first heat medium stored in the first tank 10 and the detected amount of heat of the second heat medium stored in the second tank 12. A correspondence relation among the predetermined time t3 and the amounts of heat can be obtained in advance by experiments and can be stored in the storage portion of the controller 16.

Specifically, for example, in a case where the amount of heat of the first heat medium stored in the first tank 10 is large, and the amount of heat of the second heat medium stored in the second tank 12 is small, the predetermined time t3 may be set to be short, and in a case where the amount of heat of the first heat medium stored in the first tank 10 is small, and the amount of heat of the second heat medium stored in the second tank 12 is large, the predetermined time t3 may be set to be long.

For example, when each of the temperature of the first heat medium (water, for example) in the first tank 10 and the temperature of the second heat medium (water, for example) in the second tank 12 is assumed to be substantially the same as the outside air temperature or the temperature of the tap water, such as when in the trial operation of the fuel cell cogeneration system 1, the predetermined time t3 may be preset based on the volume of the first tank 10. More specifically, in a case where the volume of the first tank 10 is large, the predetermined time t3 may be set to be long, and in a case where the volume of the first tank 10 is small, the predetermined time t3 may be set to be short. In this case, the flow direction of the first heat medium flowing through the first return route 3A and the first outward route 3B may be any direction. In addition, the flow direction of the second heat medium flowing through the second outward route 8A and the second return route 8B may be any direction.

In order to prevent the misdetection, the third predetermined temperature X3°C may be set based on the amount of heat of the first heat medium stored in the first tank 10. For example, the third predetermined temperature X3°C may be set to an arbitrary temperature (45 to 50°C, for example) higher than the highest temperature (40 to 45°C, for example) of the first heat medium increased in temperature by air temperature under a circumstance where the fuel cell cogeneration system 1 is provided.

In a case where the first on-off valve 11A and the second on-off valve 11B are normal, the second heat medium flows through the second circulation passage 8 by activating the second heat medium circulator 9. With this, the first heat medium heated by the heater 5 performs the heat exchange in the heat exchanger 6 with the second heat medium flowing through the second circulation passage 8 to be cooled down. Thus, the temperature detected by the first temperature detector 7 becomes low.

In contrast, in a case where at least one of the first on-off valve 11A and the second on-off valve 11B is abnormal, the second heat medium does not flow through the second circulation passage 8, so that the heat exchange is not performed in the heat exchanger 6, and the temperature detected by the first temperature detector 7 becomes high.

Therefore, in a case where the temperature T3 is not the third predetermined temperature X3°C or higher (i.e., in a case where the temperature T3 is lower than the third predetermined temperature X3°C) (No in Step S123), the controller 16 determines that the first on-off valve 11A and the second on-off valve 11B are not abnormal, that is, the first valve (the fuel cell cogeneration system 1) is not abnormal (Step S124), stops the heater 5, the first heat medium circulator 4, and the second heat medium circulator 9 (Step S125), and terminates the program.

In contrast, in a case where the temperature T3 is not lower than the third predetermined temperature X3°C (Yes in Step S123), the controller 16 determines that at least one of the first on-o ff valve 11A and the second on-off valve 11B is abnormal, that is, the first valve (the fuel cell cogeneration system 1) is abnormal (Step S126). Then, the controller 16 informs that at least one of the first on-off valve 11A and the second on-off valve 11B is abnormal (the first valve is abnormal) (Step S127).

Next, the controller 16 stops the heater 5, the first heat medium circulator 4, and the second heat medium circulator 9 (Step S128), stops the operation of the fuel cell cogeneration system 1 (Step S129), and terminates the program. It should be noted that the controller 16 does not have to execute Step S127.

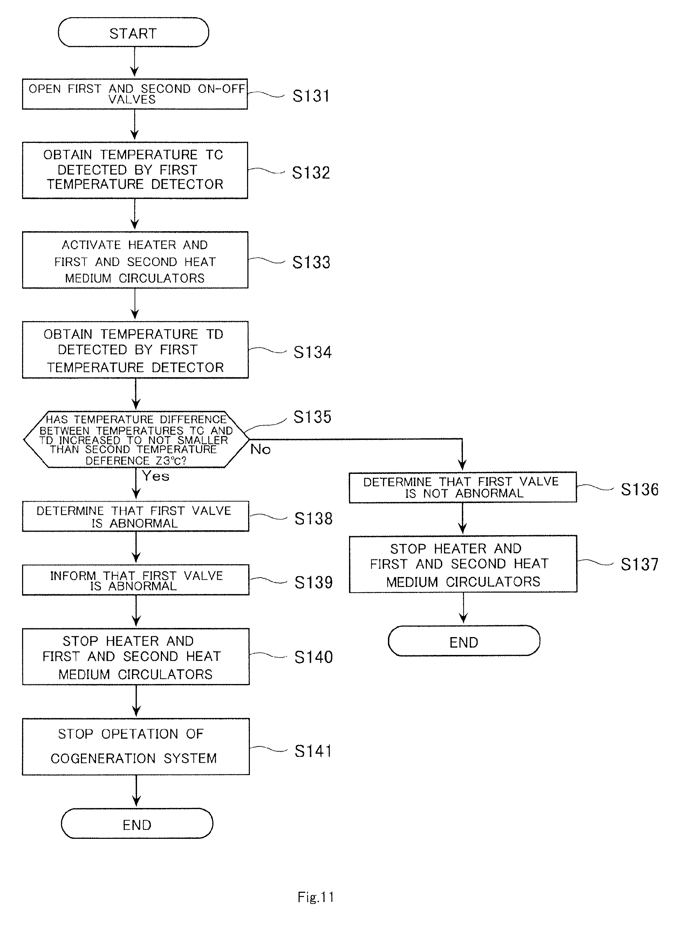

Fig. 11 is a flow chart showing another example of the abnormality determining operation of the fuel cell cogeneration system of Modification Example 1 of Embodiment 2.

As shown in Fig. 11, the controller 16 opens the first on-off valve 11A and the second on-off valve 11B (Step S131) and obtains a temperature TC of the first heat medium detected by the first temperature detector 7 (Step S 132). Next, the controller 16 activates the heater 5, the first heat medium circulator 4, and the second heat medium circulator 9 (Step S 133), that is, the controller 16 activates the second heat medium circulator 9 at the same time as the execution of the first heating operation.

Next, after the predetermined time t3 (ten minutes, for example), the controller 16 obtains a temperature TD of the first heat medium detected by the first temperature detector 7 (Step S134). Then, the controller 16 determines whether or not the temperature difference between the temperature TC obtained in Step S 132 and the temperature TD obtained in Step S134 increases to become not smaller than a third temperature difference Z3°C (Step S135).

The third temperature difference Z3°C can be preset arbitrarily based on the operation amounts of the first heat medium circulator 4 and the heater 5, the amount of heat of the first heat medium stored in the first tank 10, and the like or by experiments. For example, the third temperature difference Z3°C may be set to 10°C.

In a case where the temperature difference between the temperatures TC and TD is a temperature change smaller than the third temperature difference Z3°C (No in Step S135), the controller 16 determines that the first on-off valve 11A and the second on-off valve 11B are not abnormal (the first valve is not abnormal) (Step S136), stops the heater 5, the first heat medium circulator 4, and the second heat medium circulator 9 (Step S137), and terminates the program.

In contrast, in a case where the temperature difference between the temperatures TC and TD increases to become not smaller than the third temperature difference Z3°C (Yes in Step S135), the controller 16 determines that at least one of the first on-off valve 11A and the second on-off valve 11B is abnormal (the first valve is abnormal) (Step S138). Then, the controller 16 informs that at least one of the first on-off valve 11A and the second on-off valve 11B is abnormal (the first valve is abnormal) (Step S139).

Next, the controller 16 stops the heater 5, the first heat medium circulator 4, and the second heat medium circulator 9 (Step S140), stops the operation of the fuel cell cogeneration system 1 (Step S141), and terminates the program. It should be noted that the controller 16 does not have to execute Step S139.

The fuel cell cogeneration system 1 of Modification Example 1 configured as above also has the same operational advantages as the fuel cell cogeneration system 1 of Embodiment 2. In addition, since the heater 5, the first heat medium circulator 4, and the second heat medium circulator 9 are activated at the same time in the fuel cell cogeneration system 1 of Modification Example 1, the execution time of the abnormality determining operation can be made shorter than that of the fuel cell cogeneration system 1 of Embodiment 2, so that whether the on-off valve is normal or abnormal can be determined quickly.

### Modification Example 2

The fuel cell cogeneration system of Modification Example 2 of Embodiment 2 further includes: a second circulation passage in which a second heat medium circulates; a second heat medium circulator disposed at the second circulation passage and configured to convey the second heat medium; a second tank disposed at the second circulation passage and configured to store the second heat medium; and a heat exchanger configured to perform heat exchange between the first heat medium flowing through the first circulation passage and the second heat medium flowing through the second circulation passage, wherein: the first valve is an on-off valve disposed at the second circulation passage; the first temperature detector is disposed at the second circulation passage; the controller executes the first heating operation and activates the second heat medium circulator; and in a case where the temperature detected by the first temperature detector after the activation of the second heat medium circulator is lower than a preset fourth predetermined temperature or in a case where the temperature difference between the temperatures detected by the first temperature detector before and after the activation of the second heat medium circulator is a temperature change smaller than a preset fourth temperature difference, the controller determines that the on-off valve is abnormal, informs that the on-off valve is abnormal, or stops the operation of the cogeneration.

### Configuration of Fuel Cell Cogeneration System

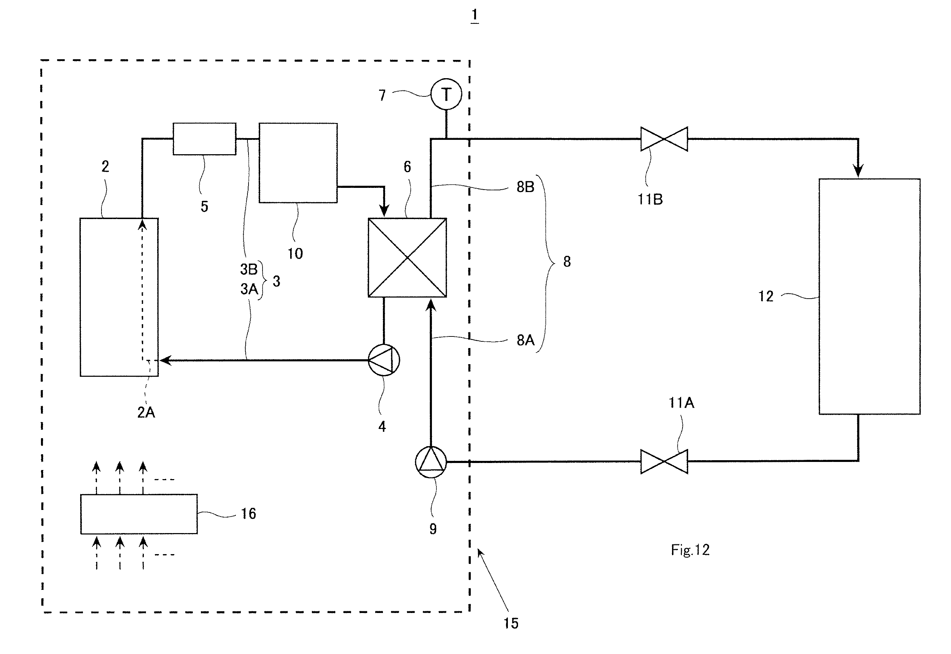

Fig. 12 is a schematic diagram showing a schematic configuration of the fuel cell cogeneration system of Modification Example 2 of Embodiment 2.

As shown in Fig. 12, the fuel cell cogeneration system 1 of Modification Example 2 is basically the same in configuration as the fuel cell cogeneration system 1 according to Embodiment 2 but is different from the fuel cell cogeneration system 1 according to Embodiment 2 in that the first temperature detector 7 is disposed at the second circulation passage 8. Specifically, the first temperature detector 7 is provided in the vicinity of the upstream end of the second return route 8B. The first temperature detector 7 may be provided at any portion as long as the first temperature detector 7 is provided in the second circulation passage 8. The first temperature detectors 7 may be respectively provided at both the first circulation passage 3 and the second circulation passage 8.

In Modification Example 2, the first heat medium circulator 4 is configured to cause the first heat medium to flow from the heater 5 through the first tank 10 toward the heat exchanger 6. In addition, the second heat medium circulator 9 is configured to cause the second heat medium to flow from the heat exchanger 6 toward the first temperature detector 7.

### Operations of Fuel Cell Cogeneration System

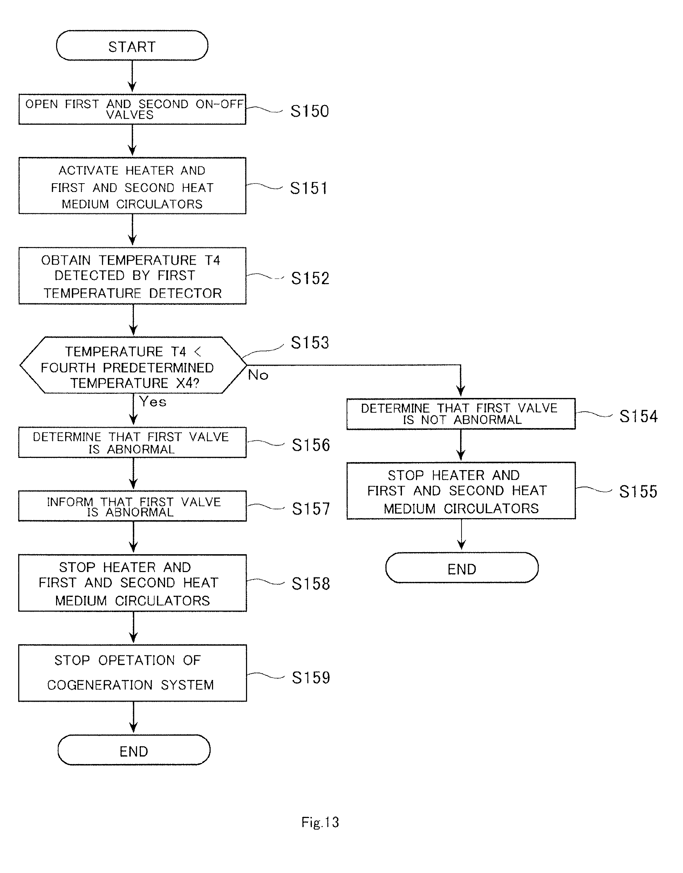

Fig. 13 is a flow chart showing one example of the abnormality determining operation of the fuel cell cogeneration system of Modification Example 2 of Embodiment 2.

As shown in Fig. 13, the controller 16 opens the first on-off valve 11A and the second on-off valve 11B (Step S150). Next, the controller 16 activates the heater 5, the first heat medium circulator 4, and the second heat medium circulator 9 (Step S151), that is, the controller 16 activates the second heat medium circulator 9 at the same time as the execution of the first heating operation.

Next, after the predetermined time t3 (ten minutes, for example), the controller 16 obtains a temperature T4 of the second heat medium detected by the first temperature detector 7 (Step S152) and determines whether or not the temperature T4 obtained in Step S152 is lower than a fourth predetermined temperature X4°C (Step S153).

In order to prevent the misdetection, the fourth predetermined temperature X4°C may be set based on the amount of heat of the second heat medium stored in the second tank 12. For example, the fourth predetermined temperature X4°C may be set to an arbitrary temperature (45 to 50°C, for example) higher than the highest temperature (40 to 45°C, for example) of the second heat medium increased in temperature by air temperature under a circumstance where the fuel cell cogeneration system 1 is provided.

For example, in a case where the second tank 12 is the lamination boiling-up tank, the fourth predetermined temperature X4°C may be set to an arbitrary temperature higher than the highest temperature of the second heat medium supplied from the lower portion of the second tank 12 to the second circulation passage 8.

In a case where the first on-off valve 11A and the second on-off valve 11B are normal, the second heat medium flows through the second circulation passage 8 by activating the second heat medium circulator 9. With this, the second heat medium flowing through the second circulation passage 8 performs the heat exchange in the heat exchanger 6 with the first heat medium flowing through the first circulation passage 3 to be heated. Thus, the temperature detected by the first temperature detector 7 becomes high.

In contrast, in a case where at least one of the first on-off valve 11A and the second on-off valve 11B is abnormal, the second heat medium does not flow through the second circulation passage 8, so that the heat exchange is not performed in the heat exchanger 6, and the temperature detected by the first temperature detector 7 does not become high.

Therefore, in a case where the temperature T4 is not lower than the fourth predetermined temperature X4°C (i.e., in a case where the temperature T4 is the fourth predetermined temperature X4°C or higher) (No in Step S153), the controller 16 determines that the first on-off valve 11A and the second on-off valve 11B are not abnormal, that is, the first valve (the fuel cell cogeneration system 1) is not abnormal (Step S154), stops the heater 5, the first heat medium circulator 4, and the second heat medium circulator 9 (Step S155), and terminates the program.

In contrast, in a case where the temperature T4 is lower than the fourth predetermined temperature X4°C (Yes in Step S153), the controller 16 determines that at least one of the first on-off valve 11A and the second on-off valve 11B is abnormal, that is, the first valve (the fuel cell cogeneration system 1) is abnormal (Step S156). Then, the controller 16 informs that at least one of the first on-off valve 11A and the second on-off valve 11B is abnormal (the first valve is abnormal) (Step S157).

Next, the controller 16 stops the heater 5, the first heat medium circulator 4, and the second heat medium circulator 9 (Step S 158), stops the operation of the fuel cell cogeneration system 1 (Step S 159), and terminates the program. It should be noted that the controller 16 does not have to execute Step S157.

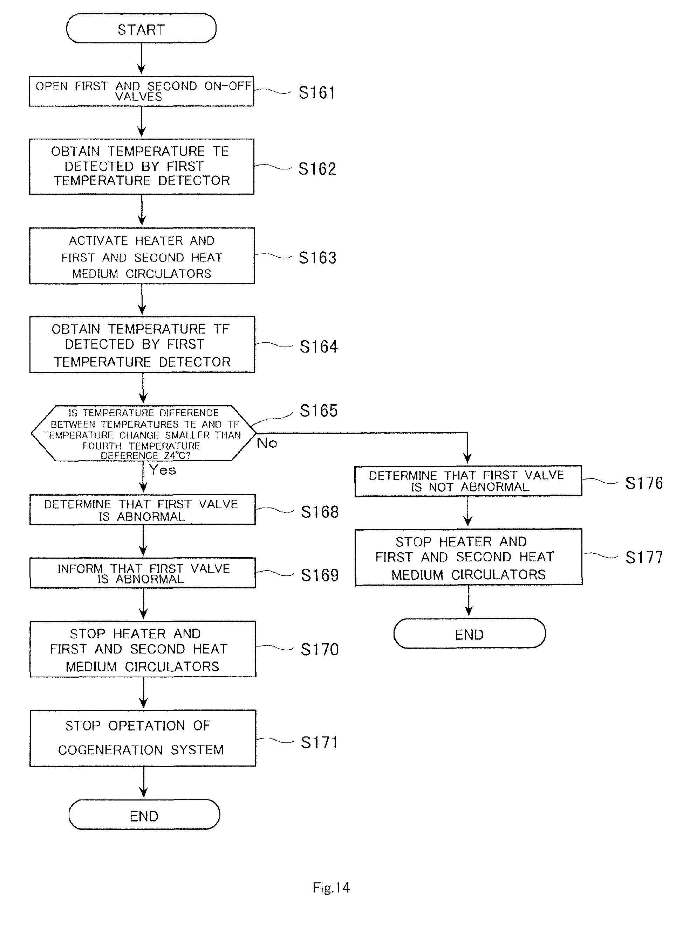

Fig. 14 is a flow chart showing another example of the abnormality determining operation of the fuel cell cogeneration system of Modification Example 2 of Embodiment 2.

As shown in Fig. 14, the controller 16 opens the first on-off valve 11A and the second on-off valve 11B (Step S161) and obtains a temperature TE of the second heat medium detected by the first temperature detector 7 (Step S162). Next, the controller 16 activates the heater 5, the first heat medium circulator 4, and the second heat medium circulator 9 (Step S163), that is, the controller 16 activates the second heat medium circulator 9 at the same time as the execution of the first heating operation.

Next, after the predetermined time t3 (ten minutes, for example), the controller 16 obtains a temperature TF of the second heat medium detected by the first temperature detector 7 (Step S164). Then, the controller 16 determines whether or not the temperature difference between the temperature TE obtained in Step S162 and the temperature TF obtained in Step S164 is a temperature change smaller than a fourth temperature difference Z4°C (Step S165).

The fourth temperature difference Z4°C can be preset arbitrarily based on the operation amounts of the first heat medium circulator 4, the second heat medium circulator 9, and the heater 5, the amount of heat of the first heat medium stored in the first tank 10, the amount of heat of the second heat medium stored in the second tank 12, and the like or by experiments. For example, the fourth temperature difference Z4°C may be set to 10°C.

In a case where the temperature difference between the temperatures TE and TF is not the temperature change smaller than the fourth temperature difference Z4°C (i.e., the temperature difference between the temperatures TE and TF increases to become not smaller than the fourth temperature difference Z4°C) (No in Step S165), the controller 16 determines that the first on-off valve 11A and the second on-off valve 11B are not abnormal (the first valve is not abnormal) (Step S166), stops the heater 5, the first heat medium circulator 4, and the second heat medium circulator 9 (Step S167), and terminates the program.

In contrast, in a case where the temperature difference between the temperatures TE and TF is the temperature change smaller than the fourth temperature difference Z4°C (Yes in Step S165), the controller 16 determines that at least one of the first on-off valve 11A and the second on-off valve 11B is abnormal (the first valve is abnormal) (Step S168). Then, the controller 16 informs that at least one of the first on-off valve 11A and the second on-off valve 11B is abnormal (the first valve is abnormal) (Step S169).

Next, the controller 16 stops the heater, the first heat medium circulator 4, and the second heat medium circulator 9 (Step S170), stops the operation of the fuel cell cogeneration system 1 (Step S171), and terminates the program. It should be noted that the controller 16 does not have to execute Step S169.

The fuel cell cogeneration system 1 of Modification Example 2 configured as above also has the same operational advantages as the fuel cell cogeneration system 1 according to Embodiment 2. In addition, since the heater 5, the first heat medium circulator 4, and the second heat medium circulator 9 are activated at the same time in the fuel cell cogeneration system 1 of Modification Example 2, the execution time of the abnormality determining operation can be made shorter than that of the fuel cell cogeneration system 1 of Embodiment 2, so that whether the on-off valve is normal or abnormal can be determined quickly.

### Embodiment 3

The fuel cell cogeneration system according to Embodiment 3 further includes: a second circulation passage in which a second heat medium circulates; a second heat medium circulator disposed at the second circulation passage and configured to convey the second heat medium; a second tank disposed at the second circulation passage and configured to store the second heat medium; and a heat exchanger configured to perform heat exchange between the first heat medium flowing through the first circulation passage and the second heat medium flowing through the second circulation passage, wherein: the first valve is an on-off valve disposed at the second circulation passage; the first heater is provided in the second tank so as to heat the second heat medium; the controller performs a second heating operation of activating the first heat medium circulator and the second heat medium circulator and heating the second heat medium by the first heater; and in a case where the temperature detected by the first temperature detector after the second heating operation is lower than a preset fifth predetermined temperature or in a case where the temperature difference between the temperatures detected by the first temperature detector before and after the second heating operation is a temperature change smaller than a preset fifth temperature difference, the controller determines that the on-off valve is abnormal, informs that the on-off valve is abnormal, or stops the operation of the cogeneration.

### Configuration of Fuel Cell Cogeneration System

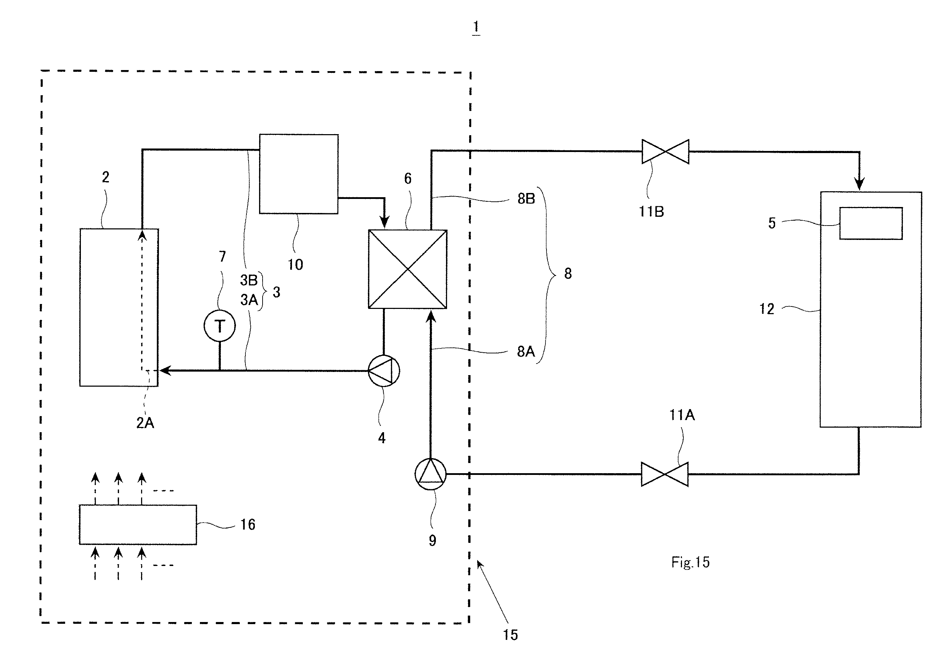

Fig. 15 is a schematic diagram showing a schematic configuration of the fuel cell cogeneration system of Embodiment 3.

As shown in Fig. 15, the fuel cell cogeneration system 1 according to Embodiment 3 is basically the same in configuration as the fuel cell cogeneration system 1 according to Embodiment 2 but is different from the fuel cell cogeneration system 1 according to Embodiment 2 in that the heater 5 is provided as a reheating unit in the second tank 12. The heaters 5 may be respectively provided at both the first circulation passage 3 and the second tank 12.

In Embodiment 3, the first heat medium circulator 4 is configured to cause the first heat medium to flow from the heat exchanger 6 toward the first temperature detector 7.

The first temperature detector 7 may be provided at any portion as long as the first temperature detector 7 is provided in the first circulation passage 3. For example, the first temperature detector 7 may be provided in the first circulation passage 3 so as to be located in the vicinity of the outlet port of the heat exchanger 6.

### Operations of Fuel Cell Cogeneration System

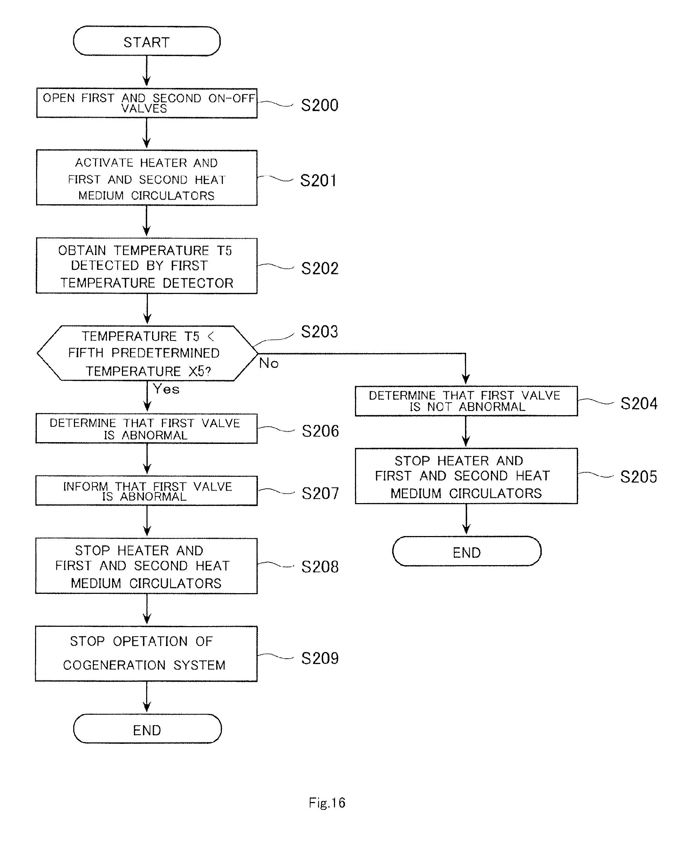

Fig. 16 is a flow chart showing one example of the abnormality determining operation of the fuel cell cogeneration system according to Embodiment 3.

As shown in Fig. 16, the controller 16 opens the first on-off valve 11A and the second on-off valve 11B (Step S200). Next, the controller 16 activates the heater 5, the first heat medium circulator 4, and the second heat medium circulator 9 (Step S201) to execute a second heating operation.

Next, after the predetermined time t3 (ten minutes, for example), the controller 16 obtains a temperature T5 of the second heat medium detected by the first temperature detector 7 (Step S202) and determines whether or not the temperature T5 obtained in Step S202 is lower than a fifth predetermined temperature X5°C (Step S203).

In order to prevent the misdetection, the fifth predetermined temperature X5°C may be set based on the amount of heat of the first heat medium stored in the first tank 10. For example, the fifth predetermined temperature X5°C may be set to an arbitrary temperature (45 to 50°C, for example) higher than the highest temperature (40 to 45°C, for example) of the first heat medium increased in temperature by air temperature under a circumstance where the fuel cell cogeneration system 1 is provided.

In a case where the first on-off valve 11 A and the second on-off valve 11B are normal, the second heat medium heated by the heater 5 and stored in the second tank 12 flows through the second circulation passage 8 by activating the second heat medium circulator 9. With this, the second heat medium flowing through the second circulation passage 8 performs the heat exchange in the heat exchanger 6 with the first heat medium flowing through the first circulation passage 3. Thus, the first heat medium is heated. On this account, the temperature detected by the first temperature detector 7 becomes high.

In contrast, in a case where at least one of the first on-off valve 11A and the second on-off valve 11B is abnormal, the second heat medium does not flow through the second circulation passage 8, so that the heat exchange is not performed in the heat exchanger 6, and the temperature detected by the first temperature detector 7 does not become high.

On this account, in a case where the temperature T5 is not lower than the fifth predetermined temperature X5°C (i.e., in a case where the temperature T5 is the fifth predetermined temperature X5°C or higher) (No in Step S203), the controller 16 determines that the first on-off valve 11 A and the second on-off valve 11B are not abnormal, that is, the first valve (the fuel cell cogeneration system 1) is not abnormal (Step S204), stops the heater 5, the first heat medium circulator 4, and the second heat medium circulator 9 (Step S205), and terminates the program.

In contrast, in a case where the temperature T5 is lower than the fifth predetermined temperature X5°C (Yes in Step S203), the controller 16 determines that at least one of the first on-off valve 11 A and the second on-off valve 11B is abnormal, that is, the first valve (the fuel cell cogeneration system 1) is abnormal (Step S206). Then, the controller 16 informs that at least one of the first on-off valve 11A and the second on-off valve 11B is abnormal (the first valve is abnormal) (Step S207).

Next, the controller 16 stops the heater 5, the first heat medium circulator 4, and the second heat medium circulator 9 (Step S208), stops the operation of the fuel cell cogeneration system 1 (Step S209), and terminates the program. It should be noted that the controller 16 does not have to execute Step S207.

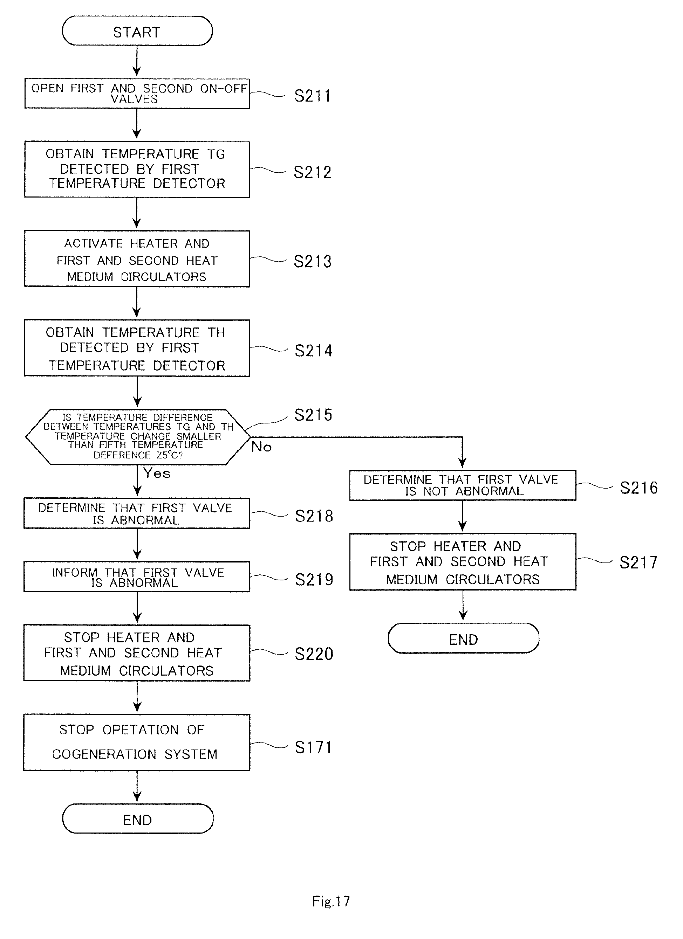

Fig. 17 is a flow chart showing another example of the abnormality determining operation of the fuel cell cogeneration system according to Embodiment 3.

As shown in Fig. 17, the controller 16 opens the first on-off valve 11A and the second on-off valve 11B (Step S211) and obtains a temperature TG of the second heat medium detected by the first temperature detector 7 (Step S212). Next, the controller 16 activates the heater 5, the first heat medium circulator 4, and the second heat medium circulator 9 (Step S213) to execute the second heating operation.

Next, after the predetermined time t3 (ten minutes, for example), the controller 16 obtains a temperature TH of the second heat medium detected by the first temperature detector 7 (Step S214). Then, the controller 16 determines whether or not the temperature difference between the temperature TG obtained in Step S212 and the temperature TH obtained in Step S214 is a temperature change smaller than a fifth temperature difference Z5°C (Step S215).

The fifth temperature difference Z5°C can be preset arbitrarily based on the operation amounts of the first heat medium circulator 4, the second heat medium circulator 9, and the heater 5, the amount of heat of the first heat medium stored in the first tank 10, the amount of heat of the second heat medium stored in the second tank 12, and the like or by experiments. For example, the fifth temperature difference Z5°C may be set to 10°C.

In a case where the temperature difference between the temperatures TG and TH is not the temperature change smaller than the fifth temperature difference Z5°C (i.e., the temperature difference between the temperatures TG and TH increases to become not smaller than the fifth temperature difference Z5°C) (No in Step S215), the controller 16 determines that the first on-off valve 11A and the second on-off valve 11B are not abnormal (the first valve is not abnormal) (Step S216), stops the heater 5, the first heat medium circulator 4, and the second heat medium circulator 9 (Step S217), and terminates the program.

In contrast, in a case where the temperature difference between the temperatures TG and TH is the temperature change smaller than the fifth temperature difference Z5°C (Yes in Step S215), the controller 16 determines that at least one of the first on-off valve 11A and the second on-off valve 11B is abnormal (the first valve is abnormal) (Step S218). Then, the controller 16 informs that at least one of the first on-off valve 11A and the second on-off valve 11B is abnormal (the first valve is abnormal) (Step S219).

Next, the controller 16 stops the heater 5, the first heat medium circulator 4, and the second heat medium circulator 9 (Step S220), stops the operation of the fuel cell cogeneration system 1 (Step S221), and terminates the program. It should be noted that the controller 16 does not have to execute Step S219.

The fuel cell cogeneration system 1 of Embodiment 3 configured as above also has the same operational advantages as the fuel cell cogeneration system 1 of Embodiment 2. In addition, since the heater 5, the first heat medium circulator 4, and the second heat medium circulator 9 are activated at the same time in the fuel cell cogeneration system 1 of Embodiment 3, the execution time of the abnormality determining operation can be made shorter than that of the fuel cell cogeneration system 1 of Embodiment 2, so that whether the on-off valve is normal or abnormal can be determined quickly.

### Modification Example 1

Next, Modification Example of the fuel cell cogeneration system 1 according to Embodiment 3 will be explained.

The fuel cell cogeneration system of Modification Example 1 of Embodiment 3 further includes: a second circulation passage in which a second heat medium circulates; a second heat medium circulator disposed at the second circulation passage and configured to convey the second heat medium; a second tank disposed at the second circulation passage and configured to store the second heat medium; and a heat exchanger configured to perform heat exchange between the first heat medium flowing through the first circulation passage and the second heat medium flowing through the second circulation passage, wherein: the first valve is an on-off valve disposed at the second circulation passage; the first heater is provided in the second tank so as to heat the second heat medium; the first temperature detector is disposed at the second circulation passage; the controller performs a third heating operation of activating the second heat medium circulator and heating the second heat medium by the first heater; and in a case where the temperature detected by the first temperature detector after the third heating operation is lower than a preset sixth predetermined temperature or in a case where the temperature difference between the temperatures detected by the first temperature detector before and after the third heating operation is a temperature change smaller than a preset sixth temperature difference, the controller determines that the on-off valve is abnormal, informs that the on-off valve is abnormal, or stops the operation of the cogeneration.

### Configuration of Fuel Cell Cogeneration System

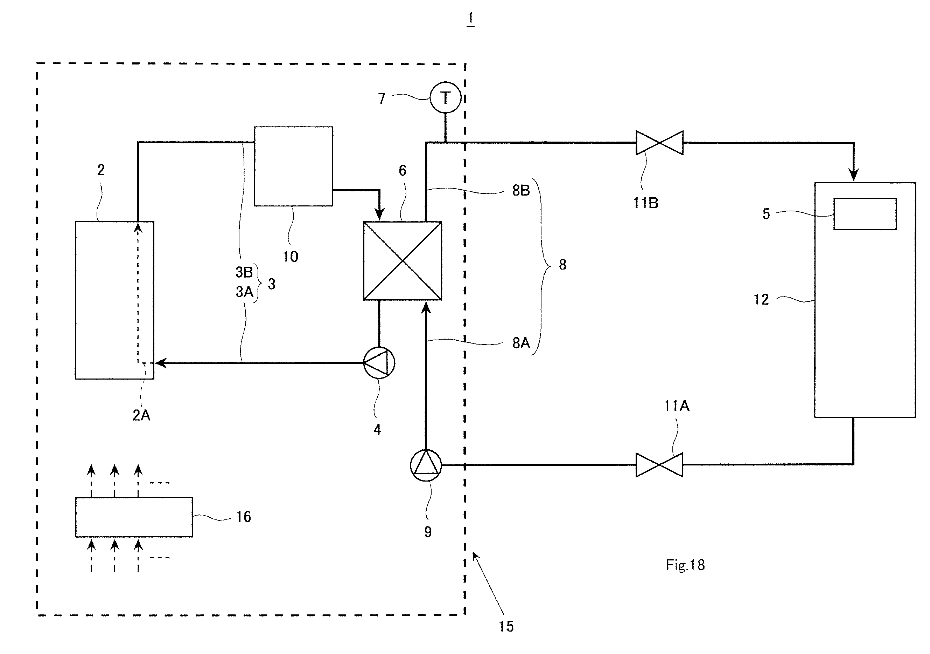

Fig. 18 is a schematic diagram showing a schematic configuration of the fuel cell cogeneration system of Modification Example 1 of Embodiment 3.

As shown in Fig. 18, the fuel cell cogeneration system 1 of Modification Example 1 is basically the same as the fuel cell cogeneration system 1 according to Embodiment 3 but is different from the fuel cell cogeneration system 1 according to Embodiment 3 in that the first temperature detector 7 is disposed at the second circulation passage 8. Specifically, the first temperature detector 7 is provided in the vicinity of the upstream end of the second return route 8B. The first temperature detector 7 may be provided at any portion as long as the first temperature detector 7 is provided in the second circulation passage 8. The first temperature detectors 7 may be respectively provided at both the first circulation passage 3 and the second circulation passage 8.

In Modification Example 1, the second heat medium circulator 9 is configured to cause the second heat medium to flow from the heat exchanger 6 toward the first temperature detector 7.

### Operations of Fuel Cell Cogeneration System

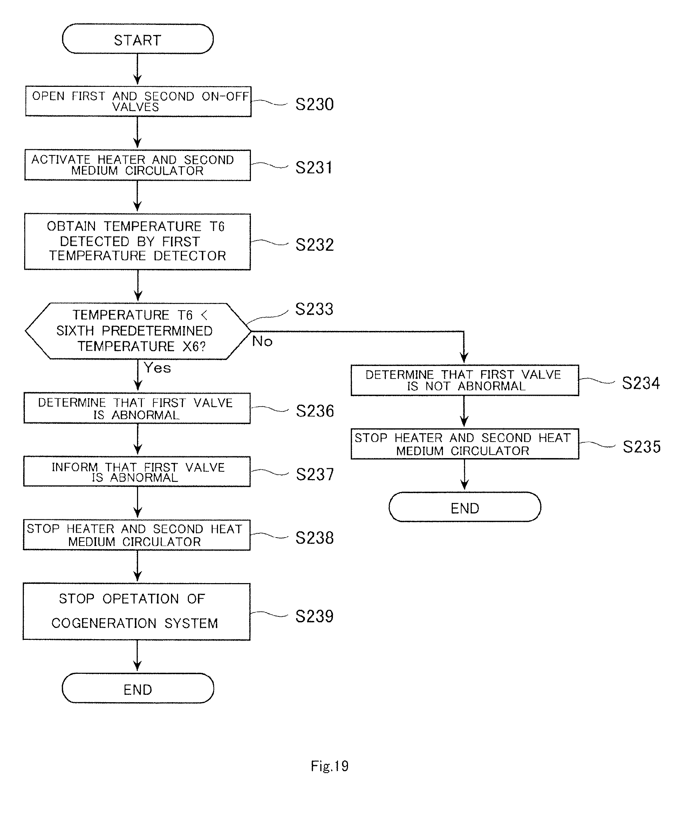

Fig. 19 is a flow chart showing one example of the abnormality determining operation of the fuel cell cogeneration system of Modification Example 1 of Embodiment 3.

As shown in Fig. 19, the controller 16 opens the first on-off valve 11A and the second on-off valve 11B (Step S230). Next, the controller 16 activates the heater 5 and the second heat medium circulator 9 (Step S231) to execute a third heating operation.

Next, after the predetermined time t3 (ten minutes, for example), the controller 16 obtains a temperature T6 of the second heat medium detected by the first temperature detector 7 (Step S232) and determines whether or not the temperature T6 obtained in Step S232 is lower than a sixth predetermined temperature X6°C (Step S233).

In order to prevent the misdetection, the sixth predetermined temperature X6°C may be set based on the amount of heat of the second heat medium stored in the second tank 12. For example, the sixth predetermined temperature X6°C may be set to an arbitrary temperature (45 to 50°C, for example) higher than the highest temperature (40 to 45°C, for example) of the second heat medium increased in temperature by air temperature under a circumstance where the fuel cell cogeneration system 1 is provided.

In a case where the first on-off valve 11A and the second on-off valve 11B are normal, the second heat medium heated by the heater 5 and stored in the second tank 12 flows through the second circulation passage 8 by activating the second heat medium circulator 9. With this, the temperature detected by the first temperature detector 7 becomes high.

In contrast, in a case where at least one of the first on-off valve 11 A and the second on-off valve 11B is abnormal, the second heat medium does not flow through the second circulation passage 8, so that the temperature detected by the first temperature detector 7 does not become high.

Therefore, in a case where the temperature T6 is not lower than the sixth predetermined temperature X6°C (i.e., in a case where the temperature T6 is the sixth predetermined temperature X6°C or higher) (No in Step S233), the controller 16 determines that the first on-off valve 11A and the second on-off valve 11B are not abnormal, that is, the first valve (the fuel cell cogeneration system 1) is not abnormal (Step S234), stops the heater 5 and the second heat medium circulator 9 (Step S235), and terminates the program.

In contrast, in a case where the temperature T6 is lower than the sixth predetermined temperature X6°C (Yes in Step S233), the controller 16 determines that at least one of the first on-off valve 11A and the second on-off valve 11B is abnormal, that is, the first valve (the fuel cell cogeneration system 1) is abnormal (Step S236). Then, the controller 16 informs that at least one of the first on-off valve 11A and the second on-off valve 11B is abnormal (the first valve is abnormal) (Step S237).

Next, the controller 16 stops the heater 5 and the second heat medium circulator 9 (Step S238), stops the operation of the fuel cell cogeneration system 1 (Step S239), and terminates the program. It should be noted that the controller 16 does not have to execute Step S237.

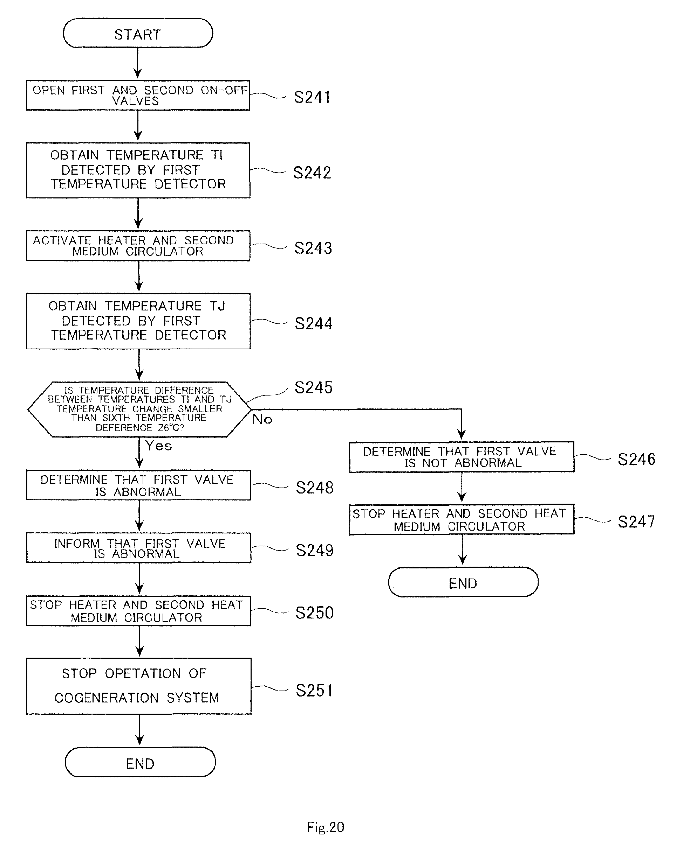

Fig. 20 is a flow chart showing another example of the abnormality determining operation of the fuel cell cogeneration system of Modification Example 1 of Embodiment 3.

As shown in Fig. 20, the controller 16 opens the first on-off valve 11A and the second on-off valve 11B (Step S241) and obtains a temperature TI of the second heat medium detected by the first temperature detector 7 (Step S242). Next, the controller 16 activates the heater 5 and the second heat medium circulator 9 (Step S243) to execute the third heating operation.

Next, after the predetermined time t3 (ten minutes, for example), the controller 16 obtains a temperature TJ of the second heat medium detected by the first temperature detector 7 (Step S244). Then, the controller 16 determines whether or not the temperature difference between the temperature TI obtained in Step S242 and the temperature TJ obtained in Step S244 is a temperature change smaller than a sixth temperature difference Z6°C (Step S245).

The sixth temperature difference Z6°C can be preset arbitrarily based on the operation amounts of the second heat medium circulator 9 and the heater 5, the amount of heat of the second heat medium stored in the second tank 12, and the like or by experiments. For example, the sixth temperature difference Z6°C may be set to 10°C.

In a case where the temperature difference between the temperatures TI and TJ is not the temperature change smaller than the sixth temperature difference Z6°C (i.e., the temperature difference between the temperatures TI and TJ increases to become not smaller than the sixth temperature difference Z6°C) (No in Step S245), the controller 16 determines that the first on-off valve 11A and the second on-off valve 11B are not abnormal (the first valve is not abnormal) (Step S246), stops the heater 5 and the second heat medium circulator 9 (Step S247), and terminates the program.

In contrast, in a case where the temperature difference between the temperatures TI and TJ is the temperature change smaller than the sixth temperature difference Z6°C (Yes in Step S245), the controller 16 determines that at least one of the first on-off valve 11 A and the second on-off valve 11B is abnormal (the first valve is abnormal) (Step S248). Then, the controller 16 informs that at least one of the first on-off valve 11A and the second on-off valve 11B is abnormal (the first valve is abnormal) (Step S249).

Next, the controller 16 stops the heater 5 and the second heat medium circulator 9 (Step S250), stops the operation of the fuel cell cogeneration system 1 (Step S251), and terminates the program. It should be noted that the controller 16 does not have to execute Step S249.

The fuel cell cogeneration system 1 of Modification Example 1 configured as above also has the same operational advantages as the fuel cell cogeneration system 1 according to Embodiment 3. In addition, in the fuel cell cogeneration system 1 of Modification Example 1, the heater 5 and the second heat medium circulator 9 are activated, but the first heat medium circulator 4 does not have to be activated, so that the electric power consumption when performing the abnormality determining operation can be made smaller than that of the fuel cell cogeneration system 1 according to Embodiment 3.

### Embodiment 4

The fuel cell cogeneration system according to Embodiment 4 is configured such that: the first valve is a check valve; the first circulation passage includes a first pipe including one end connected to the first tank, a second pipe including one end connected to the power generator, a third pipe including one end connected to the power generator, a fourth pipe including one end connected to the first tank, a first connecting pipe connecting the other end of the first pipe and the other end of the second pipe, and a second connecting pipe connecting the other end of the third pipe and the other end of the fourth pipe; the controller performs the first heating operation; and in a case where the temperature detected by the first temperature detector after the first heating operation is lower than the preset first predetermined temperature or in a case where the temperature difference between the temperatures detected by the first temperature detector before and after the first heating operation is the temperature change smaller than the preset first temperature difference, the controller determines that the connection of the pipes of the first circulation passage is abnormal, informs that the connection of the pipes of the first circulation passage is abnormal, or stops the operation of the cogeneration.

### Configuration of Fuel Cell Cogeneration System

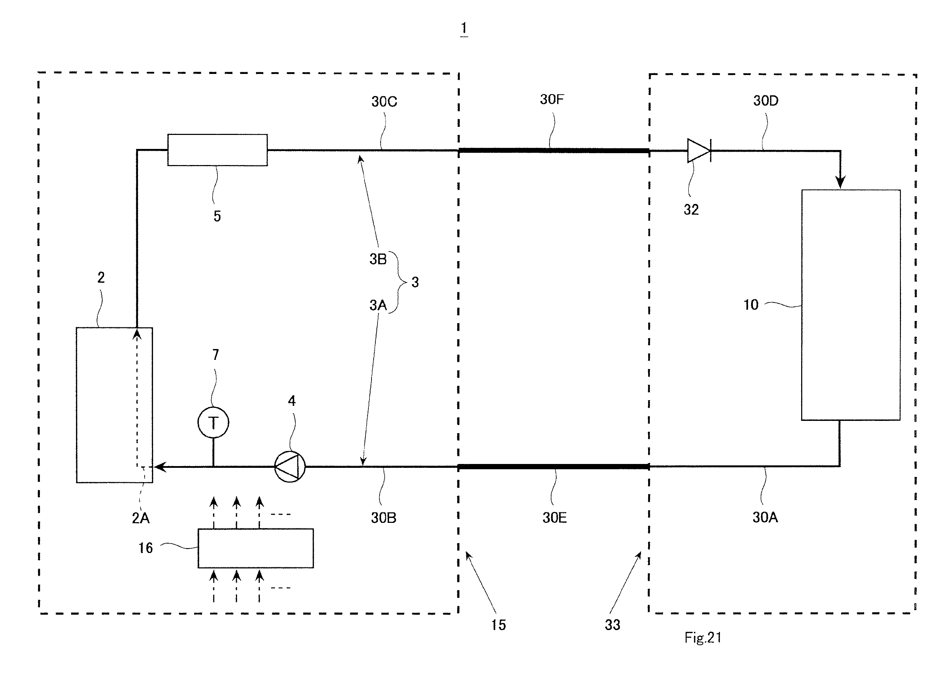

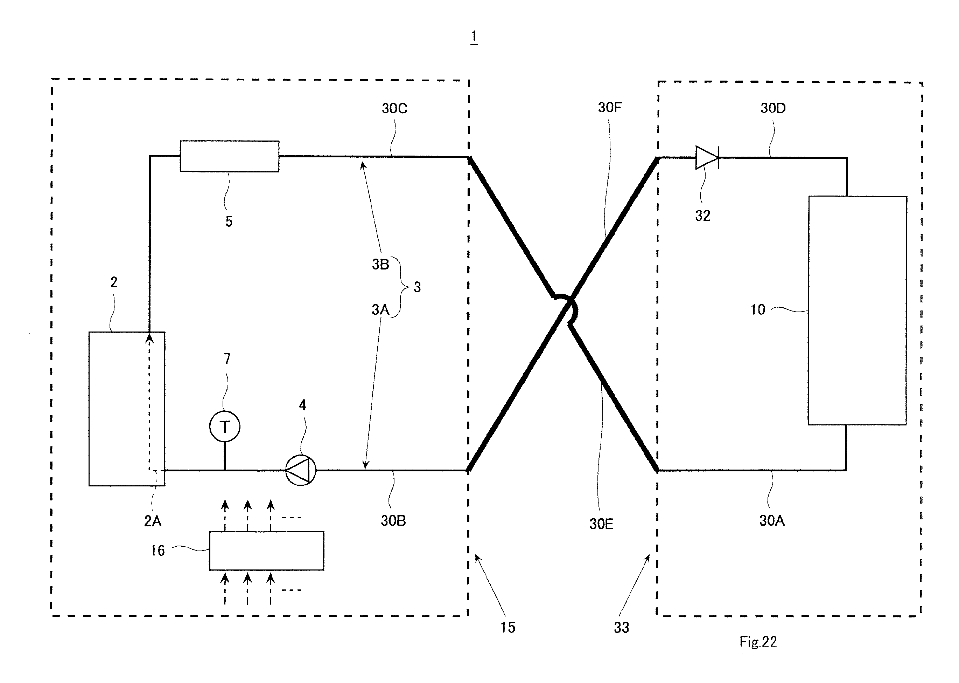

Figs. 21 and 22 are schematic diagrams each showing a schematic configuration of the fuel cell cogeneration system according to Embodiment 4. Fig. 21 shows a state where pipes constituting the first circulation passage 3 are normally connected, and Fig. 22 shows a state where the pipes constituting the first circulation passage 3 are improperly connected.

As shown in Fig. 21, the fuel cell cogeneration system 1 according to Embodiment 4 is basically the same in configuration as the fuel cell cogeneration system 1 according to Embodiment 1 but is different from the fuel cell cogeneration system 1 according to Embodiment 1 in that the first valve is constituted by a check valve 32. The check valve 32 is configured to prevent the first heat medium from flowing backward.

In Embodiment 4, the fuel cell cogeneration system 1 includes a tank unit 33 including a case accommodating the first tank 10 and the check valve 32. The first circulation passage 3 includes a first pipe 30A, a second pipe 30B, a third pipe 30C, a fourth pipe 30D, a first connecting pipe 30E, and a second connecting pipe 30F. The first pipe 30A and the fourth pipe 30D are accommodated in the case of the tank unit 33.

One end of the first pipe 30A is connected to the first tank 10, and one end of the second pipe 30B is connected to the fuel cell 2. The first connecting pipe 30E is configured to connect the other end of the first pipe 30A and the other end of the second pipe 30B.

One end of the third pipe 30C is connected to the fuel cell 2, and one end of the fourth pipe 30D is connected to the first tank 10. The second connecting pipe 30F is configured to connect the other end of the third pipe 30C and the other end of the fourth pipe 30D.

The first heat medium circulator 4 is configured to cause the first heat medium to flow from the heater 5 toward the first temperature detector 7. Therefore, as shown in Fig. 22, in a case where the first connecting pipe 30E connects the other end of the first pipe 30A and the other end of the third pipe 30C, and the second connecting pipe 30F connects the other end of the second pipe 30B and the other end of the fourth pipe 30D, the first heat medium cannot flow through the first circulation passage 3 by the check valve 32 even by activating the first heat medium circulator 4.

Therefore, the fuel cell cogeneration system 1 of Embodiment 4 determines connection states of the pipes of the first circulation passage 3 in accordance with the following flow chart.

### Operations of Fuel Cell Cogeneration System

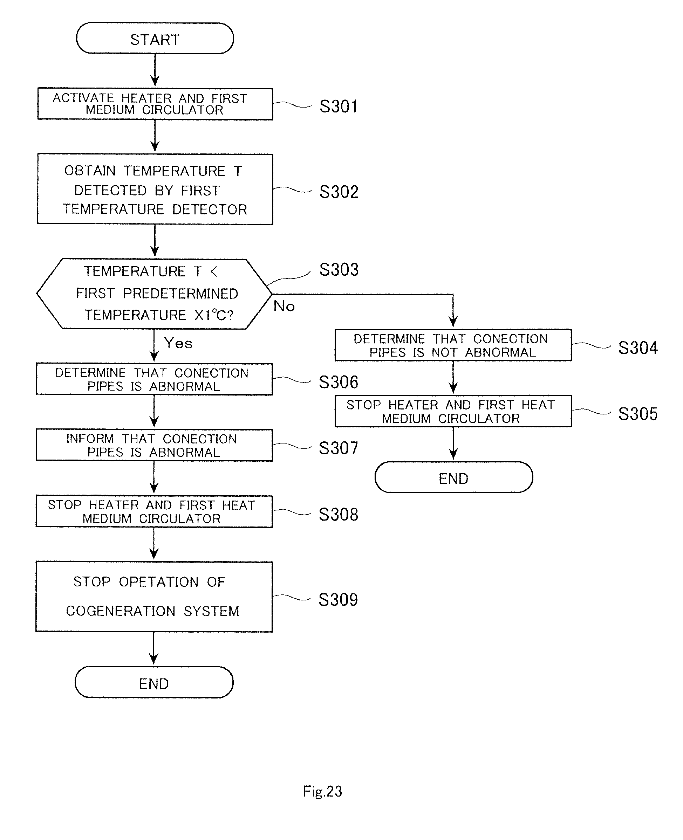

Fig. 23 is a flow chart showing one example of the abnormality determining operation of the fuel cell cogeneration system according to Embodiment 4.

As shown in Fig. 23, the controller 16 activates the heater 5 and the first heat medium circulator 4 (Step S301) to execute the first heating operation. Thus, the first heat medium is heated.

Next, after the predetermined time t1 (five minutes, for example), the controller 16 obtains the temperature T of the first heat medium detected by the first temperature detector 7 (Step S302) and determines whether or not the temperature T obtained in Step S302 is lower than the first predetermined temperature X1°C (Step S303).

In a case where the connection of the pipes constituting the first circulation passage 3 is normal, the first heat medium flows through the first circulation passage 3 (including the first heat medium channel 2A), so that the temperature detected by the first temperature detector 7 becomes high by the first heat medium heated by the heater 5. In contrast, in a case where the connection of the pipes constituting the first circulation passage 3 is abnormal, the first heat medium does not flow through the first circulation passage 3 (including the first heat medium channel 2A), so that the temperature detected by the first temperature detector 7 does not become high.

Therefore, in a case where the temperature T is not lower than the first predetermined temperature X1°C (i.e., in a case where the temperature T is the first predetermined temperature X1°C or higher) (No in Step S303), the controller 16 determines that the connection of the pipes constituting the first circulation passage 3 is not abnormal (the fuel cell cogeneration system 1 is not abnormal) (Step S304), stops the heater 5 and the first heat medium circulator 4 (Step S305), and terminates the program.

In contrast, in a case where the temperature T is lower than the first predetermined temperature X1°C (Yes in Step S303), the controller 16 determines that the connection of the pipes constituting the first circulation passage 3 is abnormal (the fuel cell cogeneration system 1 is abnormal) (Step S306). Then, the controller 16 informs that the connection of the pipes constituting the first circulation passage 3 is abnormal (Step S307).

Next, the controller 16 stops the heater 5 and the first heat medium circulator 4 (Step S308), stops the operation of the fuel cell cogeneration system 1 (Step S309), and terminates the program. It should be noted that the controller 16 does not have to execute Step S307.

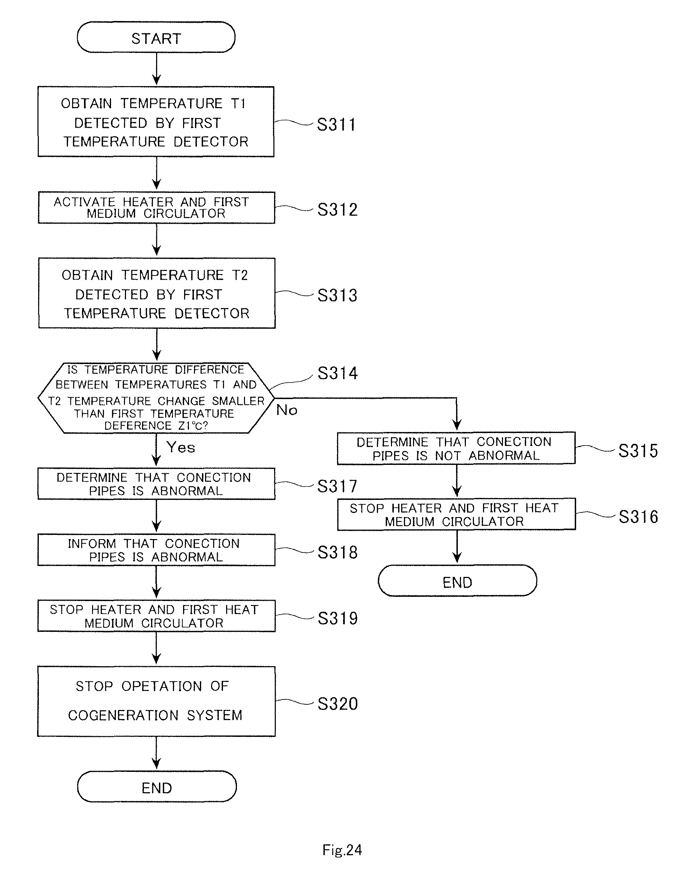

Fig. 24 is a flow chart showing another example of the abnormality determining operation of the fuel cell cogeneration system according to Embodiment 1.

As shown in Fig. 24, the controller 16 obtains the temperature T1 of the first heat medium detected by the first temperature detector 7 (Step S311). Next, the controller 16 activates the heater 5 and the first heat medium circulator 4 (Step S312) to execute the first heating operation. Thus, the first heat medium is heated.

Next, after the predetermined time t1 (five minutes, for example), the controller 16 obtains the temperature T2 of the first heat medium detected by the first temperature detector 7 (Step S313). Then, the controller 16 determines whether or not the temperature difference between the temperature T1 obtained in Step S311 and the temperature T2 obtained in Step S313 is the temperature change smaller than the first temperature difference Z1°C (Step S314).

Then, as described above, in a case where the connection of the pipes constituting the first circulation passage 3 is normal, the temperature detected by the first temperature detector 7 becomes high, so that the temperature difference between the temperatures T1 and T2 increases to become not smaller than the first temperature difference Z1°C. In contrast, in a case where the connection of the pipes constituting the first circulation passage 3 is abnormal, the temperature difference between the temperatures T1 and T2 becomes the temperature change smaller than the first temperature difference Z1°C.

Therefore, in a case where the temperature difference between the temperatures T1 and T2 is not the temperature change smaller than the first temperature difference Z1°C (i.e., in a case where the temperature difference between the temperatures T1 and T2 increases to become not smaller than the first temperature difference Z1°C) (No in Step S314), the controller 16 determines that the connection of the pipes constituting the first circulation passage 3 is not abnormal (Step S315), stops the heater 5 and the first heat medium circulator 4 (Step S316), and terminates the program.

In contrast, in a case where the temperature difference between the temperatures T1 and T2 is the temperature change smaller than the first temperature difference Z1°C (Yes in Step S314), the controller 16 determines that the connection of the pipes constituting the first circulation passage 3 is abnormal (Step S317). Then, the controller 16 informs that the connection of the pipes constituting the first circulation passage 3 is abnormal (Step S318).

Next, the controller 16 stops the heater 5 and the first heat medium circulator 4 (Step S319), stops the operation of the fuel cell cogeneration system 1 (Step S320), and terminates the program. It should be noted that the controller 16 does not have to execute Step S318.

The fuel cell cogeneration system 1 of Embodiment 4 configured as above can detect the abnormality of the fuel cell cogeneration system 1, such as the abnormality of the connection of the pipes constituting the first circulation passage 3.

### Modification Example 1

Next, Modification Example of the fuel cell cogeneration system 1 according to Embodiment 4 will be explained.

The fuel cell cogeneration system of Modification Example 1 of Embodiment 4 is configured such that: the first valve is a check valve; the first circulation passage includes, when viewed from a flow direction of the first heat medium, a first pipe including one end connected to the first tank, a second pipe including one end connected to the power generator, a third pipe including one end connected to the power generator, a fourth pipe including one end connected to the first tank, a first connecting pipe connecting the other end of the first pipe and the other end of the second pipe, and a second connecting pipe connecting the other end of the third pipe and the other end of the fourth pipe; the controller performs the first heating operation; and in a case where the temperature detected by the first temperature detector after the first heating operation is lower than the preset first predetermined temperature or in a case where the temperature difference between the temperatures detected by the first temperature detector before and after the first heating operation is the temperature change smaller than the preset first temperature difference, the controller determines that the connection of the pipes constituting the first circulation passage is abnormal, informs that the connection of the pipes of the first circulation passage is abnormal, or stops the operation of the cogeneration.

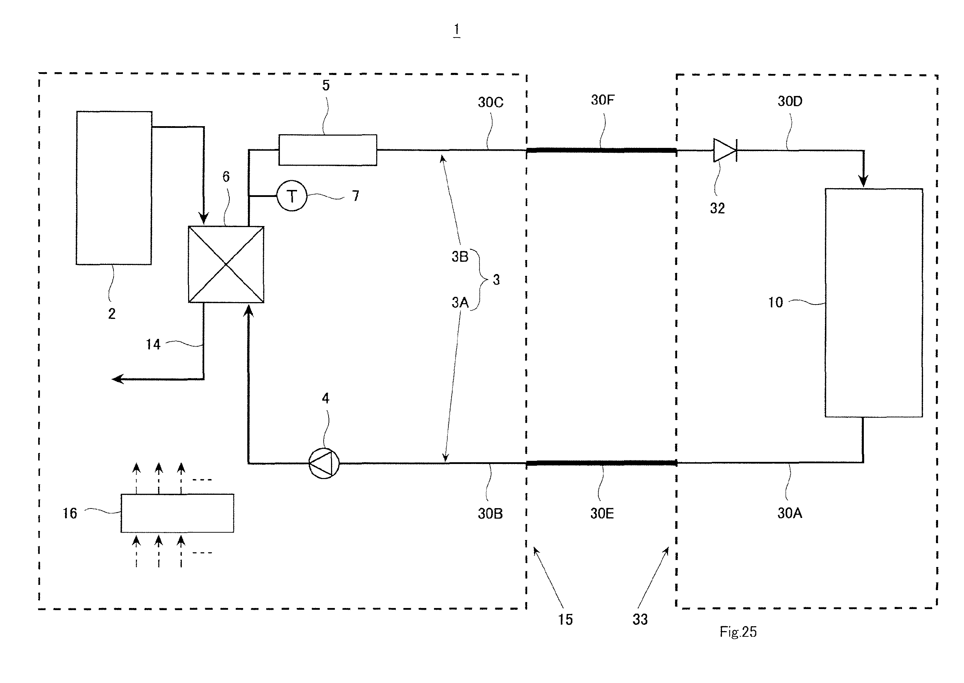

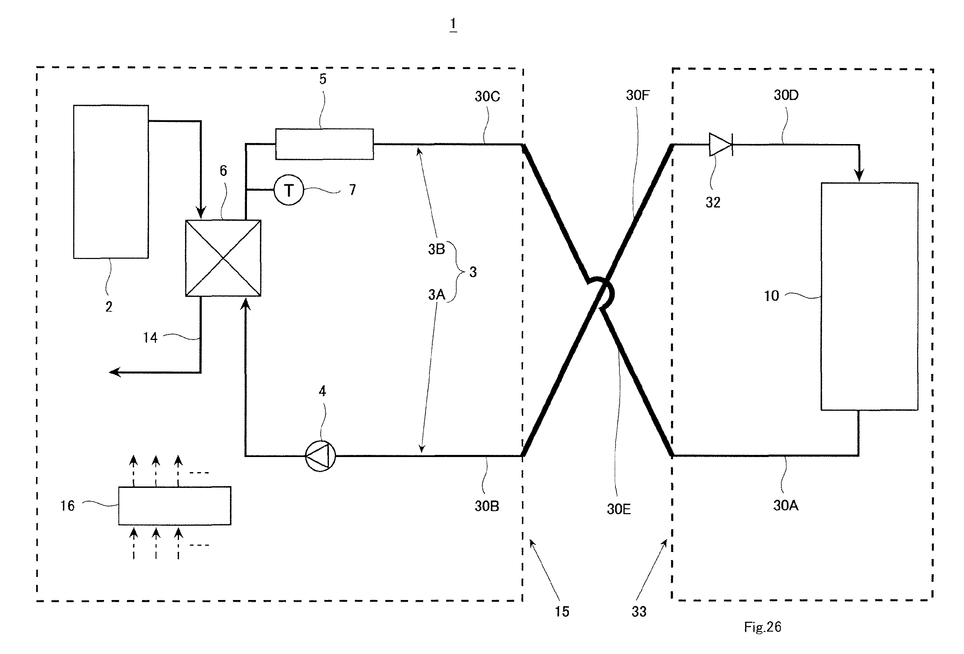

Figs. 25 and 26 are schematic diagrams each showing a schematic configuration of the fuel cell cogeneration system of Modification Example 1 of Embodiment 4. Fig. 25 shows a state where the pipes constituting the first circulation passage 3 are normally connected, and Fig. 26 shows a state where the pipes constituting the first circulation passage 3 are improperly connected.

As shown in Fig. 25, the fuel cell cogeneration system 1 of Modification Example 1 is basically the same in configuration as the fuel cell cogeneration system 1 according to Embodiment 4 but is different from the fuel cell cogeneration system 1 according to Embodiment 4 in that the fuel cell cogeneration system 1 of Modification Example 1 further includes the exhaust gas passage 14 and the heat exchanger 6.

Specifically, the exhaust gas passage 14 is configured such that the high-temperature exhaust gas discharged from the fuel cell 2 flows therethrough. In Modification Example 1, the fuel cell 2 may be constituted by a solid-oxide fuel cell (SOFC), a molten carbonate type fuel cell (MCFC), or the like, which discharges the high-temperature (for example, several hundred degrees centigrade) exhaust gas.

The heat exchanger 6 is disposed at a portion of the exhaust gas passage 14 (to be precise, the primary channel of the heat exchanger 6 is interposed in the exhaust gas passage 14). The first circulation passage 3 is connected to the secondary channel of the heat exchanger 6. More particularly, the downstream end of the first return route 3A is connected to the upstream end of the secondary channel of the heat exchanger 6, and the upstream end of the first outward route 3B is connected to the downstream end of the secondary channel of the heat exchanger 6. With this, the heat exchanger 6 can perform the heat exchange between the exhaust gas flowing through the exhaust gas passage 14 and the first heat medium (water, for example) flowing through the first circulation passage 3.

Further, in Modification Example 1, the first heat medium circulator 4 is configured to cause the first heat medium to flow from the heater 5 through the first tank 10 and the heat exchanger 6 toward the first temperature detector 7.

The fuel cell cogeneration system 1 of Modification Example 1 configured as above also has the same operational advantages as the fuel cell cogeneration system 1 according to Embodiment 4.

### Embodiment 5

The fuel cell cogeneration system according to Embodiment 5 is configured such that: the second circulation passage includes a fifth pipe including one end connected to the second tank, a sixth pipe including one end connected to the heat exchanger, a seventh pipe including one end connected to the heat exchanger, an eighth pipe including one end connected to the second tank, a third connecting pipe connecting the other end of the fifth pipe and the other end of the sixth pipe, and a fourth connecting pipe connecting the other end of the seventh pipe and the other end of the eighth pipe; the first valve is a check valve disposed at the second circulation passage; the controller performs the first heating operation; in a case where the temperature detected by the first temperature detector after the first heating operation becomes not lower than a preset second predetermined temperature, the controller activates the second heat medium circulator; and in a case where the temperature difference between the temperatures detected by the first temperature detector before and after the activation of the second heat medium circulator increases to become not smaller than a preset second temperature difference, the controller determines that the connection of the pipes constituting the second circulation passage is abnormal, informs that the connection of the pipes of the second circulation passage is abnormal, or stops the operation of the cogeneration.

### Configuration of Fuel Cell Cogeneration System

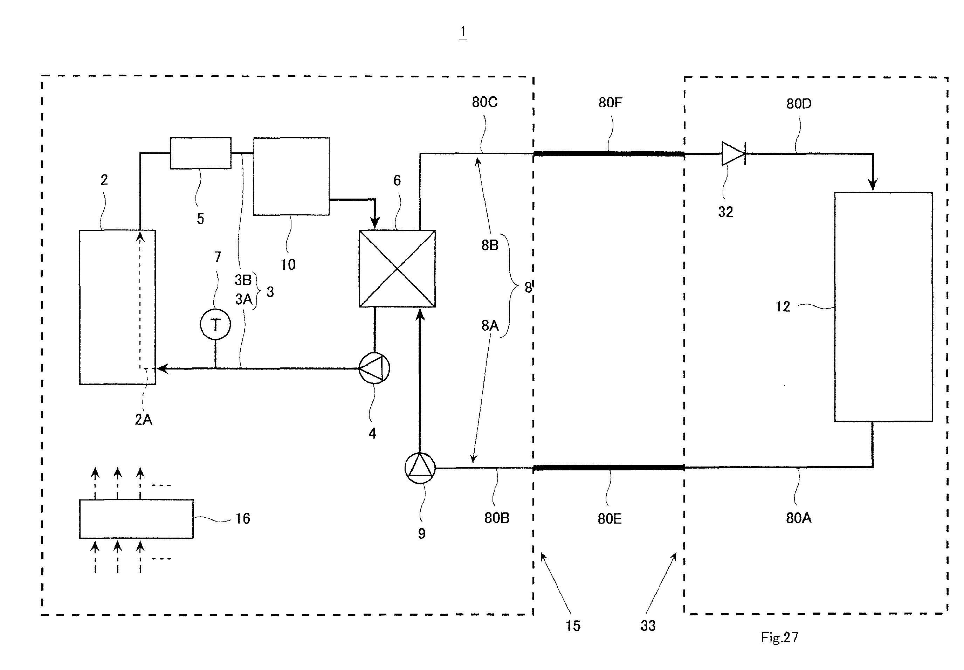

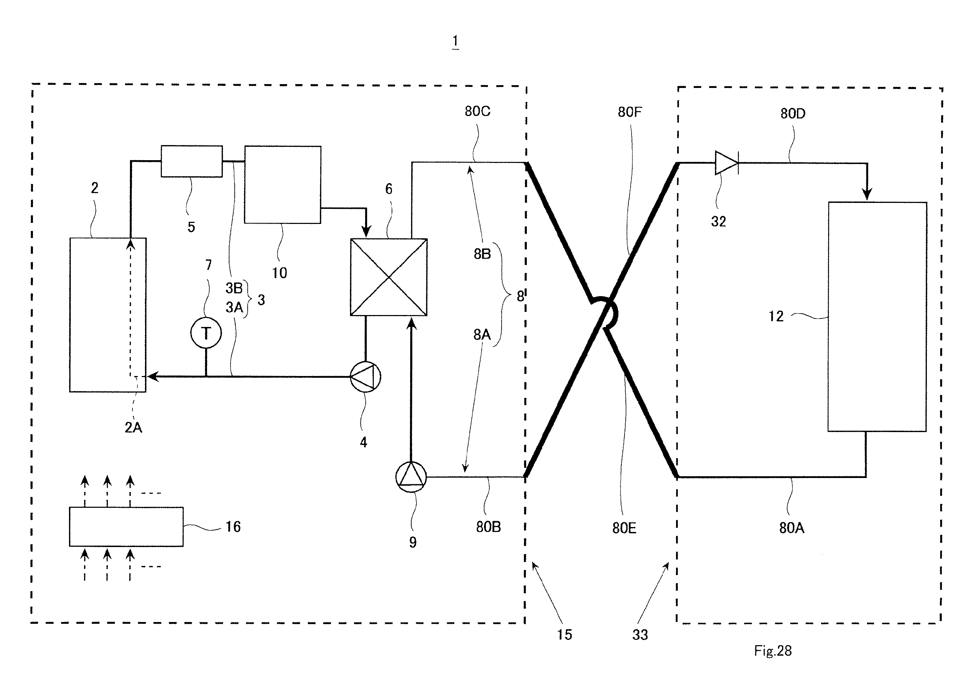

Figs. 27 and 28 are schematic diagrams each showing a schematic configuration of the fuel cell cogeneration system according to Embodiment 5. Fig. 27 shows a state where the pipes constituting the second heat medium circulator 9 are normally connected, and Fig. 28 shows a state where the pipes constituting the second heat medium circulator 9 are improperly connected.

As shown in Fig. 27, the fuel cell cogeneration system 1 according to Embodiment 5 is basically the same in configuration as the fuel cell cogeneration system 1 according to Embodiment 2 but is different from the fuel cell cogeneration system 1 according to Embodiment 2 in that the first valve is constituted by the check valve 32. The check valve 32 is configured to prevent the second heat medium from flowing backward.

In Embodiment 5, the fuel cell cogeneration system 1 includes the tank unit 33 including the case accommodating the second tank 12 and the check valve 32. The second circulation passage 8 includes a fifth pipe 80A, a sixth pipe 80B, a seventh pipe 80C, an eighth pipe 80D, a third connecting pipe 80E, and a fourth connecting pipe 80F. The fifth pipe 80A and the eighth pipe 80D are accommodated in the case of the tank unit 33.

One end of the fifth pipe 80A is connected to the second tank 12, and one end of the sixth pipe 80B is connected to the heat exchanger 6 (to be precise, an inlet port of the secondary channel of the heat exchanger 6). The third connecting pipe 80E is configured to connect the other end of the fifth pipe 80A and the other end of the sixth pipe 80B.

One end of the seventh pipe 80C is connected to the heat exchanger 6 (to be precise, an outlet port of the secondary channel of the heat exchanger 6), and one end of the eighth pipe 80D is connected to the second tank 12. The fourth connecting pipe 80F is configured to connect the other end of the seventh pipe 80C and the other end of the eighth pipe 80D.

Then, the second heat medium circulator 9 is configured to cause the second heat medium, heated by the heat exchanger 6, to be supplied to the upper portion of the second tank 12. Therefore, as shown in Fig. 28, in a case where the third connecting pipe 80E connects the other end of the fifth pipe 80A and the other end of the seventh pipe 80C, and the fourth connecting pipe 80F connects the other end of the sixth pipe 80B and the other end of the eighth pipe 80D, the second heat medium cannot flow through the second circulation passage 8 by the check valve 32 even by activating the second heat medium circulator 9.

Therefore, the fuel cell cogeneration system 1 according to Embodiment 5 determines the connection states of the pipes of the second circulation passage 8.

### Operations of Fuel Cell Cogeneration System

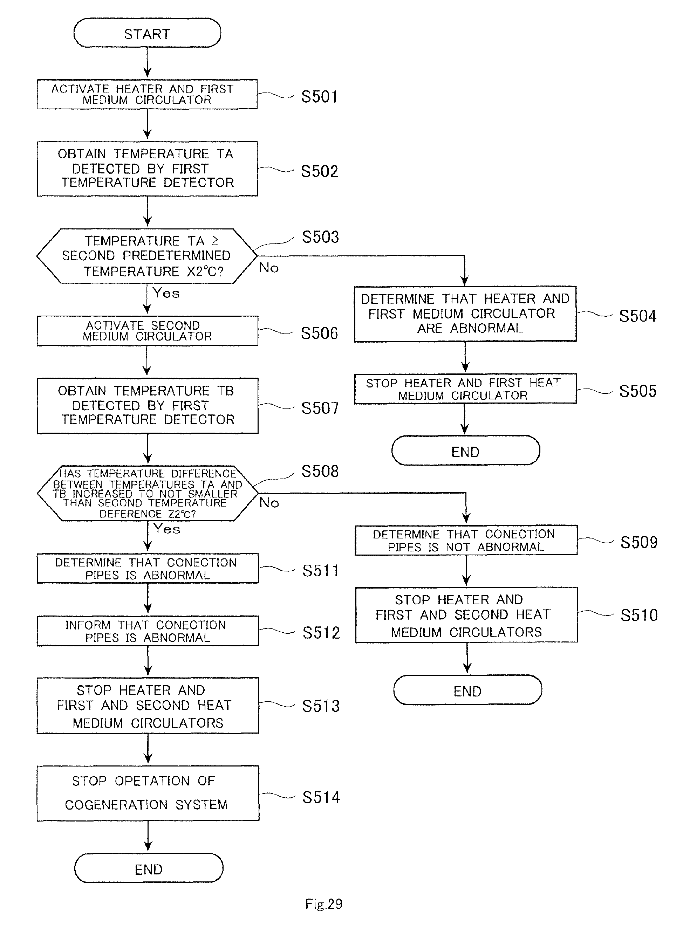

Fig. 29 is a flow chart showing one example of the abnormality determining operation of the fuel cell cogeneration system according to Embodiment 5.

As shown in Fig. 29, the controller 16 activates the heater 5 and the first heat medium circulator 4 (Step S501) to execute the first heating operation. Thus, the first heat medium is heated.

Next, after the predetermined time t1 (five minutes, for example), the controller 16 obtains the temperature TA of the first heat medium detected by the first temperature detector 7 (Step S502) and determines whether or not the temperature TA obtained in Step S502 is not lower than the second predetermined temperature X2°C (Step S503).

Next, in a case where the temperature TA is lower than the second predetermined temperature X2°C (No in Step S503), the controller 16 determines that at least one of the heater 5 and the first heat medium circulator 4 is abnormal (Step S504), stops the heater 5 and the first heat medium circulator 4, and terminates the program (Step S505).

In contrast, in a case where the temperature TA is not lower than the second predetermined temperature X2°C (Yes in Step S503), the controller 16 activates the second heat medium circulator 9 (Step S506). Then, after the predetermined time t2 (ten minutes, for example) from the activation of the second heat medium circulator 9, the controller 16 obtains the temperature TB of the first heat medium detected by the first temperature detector 7 (Step S507).

Next, the controller 16 determines whether or not the temperature difference between the temperature TA obtained in Step S502 and the temperature TB obtained in Step S507 increases to become not smaller than the second temperature difference Z2°C (Step S508).

In a case where the connection of the pipes constituting the second circulation passage 8 is normal, the second heat medium flows through the second circulation passage 8 (including the secondary channel of the heat exchanger 6). With this, the first heat medium heated by the heater 5 performs the heat exchange in the heat exchanger 6 with the second heat medium flowing through the second circulation passage 8 to be cooled down. Thus, the temperature detected by the first temperature detector 7 becomes low.

In contrast, in a case where the connection of the pipes constituting the second circulation passage 8 is abnormal, the second heat medium does not flow through the second circulation passage 8 (including the secondary channel of the heat exchanger 6), so that the heat exchange is not performed in the heat exchanger 6, and the temperature detected by the first temperature detector 7 becomes high.

Therefore, in a case where the temperature difference between the temperatures TA and TB does not increase to not smaller than the second temperature difference Z2°C (i.e., in a case where the temperature difference between the temperatures TA and TB decreases) (No in Step S508), the controller 16 determines that the connection of the pipes constituting the second circulation passage 8 is not abnormal (Step S509), stops the heater 5, the first heat medium circulator 4, and the second heat medium circulator 9 (Step S510), and terminates the program.

In contrast, in a case where the temperature difference between the temperatures TA and TB increases to become not smaller than the second temperature difference Z2°C (Yes in Step S508), the controller 16 determines that the connection of the pipes constituting the second circulation passage 8 is abnormal (Step S511). Then, the controller 16 informs that the connection of the pipes constituting the second circulation passage 8 is abnormal (Step S512).

Next, the controller 16 stops the heater 5, the first heat medium circulator 4, and the second heat medium circulator 9 (Step S513), stops the operation of the fuel cell cogeneration system 1 (Step S514), and terminates the program. It should be noted that the controller 16 does not have to execute Step S512.

The fuel cell cogeneration system 1 according to Embodiment 5 configured as above can detect the abnormality of the fuel cell cogeneration system 1, such as the abnormality of the connection of the pipes constituting the second circulation passage 8.

As is clear from the comparison between Figs. 29 and 9, the operation of determining the abnormality of the connection of the pipes constituting the second circulation passage 8 is executed in the same manner as the abnormality determining operation of the on-off valve of the fuel cell cogeneration system 1 according to Embodiment 2. Therefore, the operation of determining the abnormality of the connection of the pipes constituting the second circulation passage 8 can be executed in the same manner as the abnormality determining operation of the on-off valve of the fuel cell cogeneration system 1 in each of Modification Examples 1 and 2 of Embodiment 2, Embodiment 3, and Modification Example 1 of Embodiment 3.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention. In addition, various inventions can be made by suitable combinations of a plurality of components disclosed in the above embodiments.

### Industrial Applicability

The cogeneration system and the method of operating the cogeneration system in the present invention are useful since they can detect the abnormality of the cogeneration system.

### Reference Signs List

- 1: fuel cell cogeneration system
- 2: fuel cell
- 2A: first heat medium channel
- 3: first circulation passage
- 3A: first return route
- 3B: first outward route
- 4: first heat medium circulator
- 5: heater
- 6: heat exchanger
- 7: first temperature detector
- 8: second circulation passage
- 8A: second outward route
- 8B: second return route
- 9: second heat medium circulator
- 10: first tank
- 11A: first on-off valve
- 11B: second on-off valve
- 11C: third on-off valve
- 12: second tank
- 13: second temperature detector
- 14: exhaust gas passage
- 15: fuel cell system
- 16: controller
- 17A: connecting point
- 18: bypass passage
- 19: three-way valve
- 30A: first pipe
- 30B: second pipe
- 30C: third pipe
- 30D: fourth pipe
- 30E: first connecting pipe
- 30F: second connecting pipe
- 32: check valve
- 33: tank unit
- 80A: fifth pipe
- 80B: sixth pipe
- 80C: seventh pipe
- 80D: eighth pipe
- 80E: third connecting pipe
- 80F: fourth connecting pipe
- 101: fuel cell cogeneration system
- 102: fuel cell
- 103: cooling water line
- 105: electric heater
- 106: heat exchanger
- 108: exhaust heat recovery water line
- 108a: high-temperature exhaust heat recovery line
- 108b: low-temperature exhaust heat recovery line
- 110: hot water tank
- 113a: outflow water temperature detector
- 113b: inflow water temperature detector
- 116: determining device
- 201: fuel cell system
- 202: fuel cell
- 203: heat exchanger
- 204: first case
- 205: second case
- 208: exhaust heat recovery passage
- 210: hot water tank
- 211a: high-temperature maintenance valve
- 211b: low-temperature maintenance valve
- 215: fuel cell unit
- 233: hot water unit

## Claims

1. A cogeneration system comprising:
a power generator configured to supply electric power and heat;
a first circulation passage in which a first heat medium circulates, the first heat medium recovering the heat from the power generator;
a first temperature detector disposed at the first circulation passage and configured to detect a temperature of the first heat medium;
a first heater disposed at the first circulation passage and configured to heat the first heat medium;
a first heat medium circulator disposed at the first circulation passage and configured to convey the first heat medium;
a first tank disposed at the first circulation passage and configured to store the first heat medium;
a first valve disposed at the first circulation passage; and
a controller, wherein:
the controller performs a first heating operation of heating the first heat medium by the first heater and activating the first heat medium circulator; and
in a case where the temperature detected by the first temperature detector after the first heating operation is lower than a preset first predetermined temperature or in a case where a temperature difference between the temperatures detected by the first temperature detector before and after the first heating operation is a temperature change smaller than a preset first temperature difference, the controller determines that the cogeneration system is abnormal, informs that the cogeneration system is abnormal, or stops an operation of the cogeneration system.

2. The cogeneration system according to claim 1, wherein:
the first valve is an on-off valve;
the controller performs the first heating operation; and
in a case where the temperature detected by the first temperature detector after the first heating operation is lower than the first predetermined temperature or in a case where the temperature difference between the temperatures detected by the first temperature detector before and after the first heating operation is the temperature change smaller than the first temperature difference, the controller determines that the on-off valve is abnormal, informs that the on-off valve is abnormal, or stops the operation of the cogeneration.

3. The cogeneration system according to claim 1 or 2, further comprising:
an exhaust gas passage through which an exhaust gas discharged from the power generator flows; and
a heat exchanger configured to perform heat exchange between the first heat medium flowing through the first circulation passage and the exhaust gas flowing through the exhaust gas passage.

4. The cogeneration system according to claim 1, further comprising:
a second circulation passage in which a second heat medium circulates;
a second heat medium circulator disposed at the second circulation passage and configured to convey the second heat medium;
a second tank disposed at the second circulation passage and configured to store the second heat medium; and
a heat exchanger configured to perform heat exchange between the first heat medium flowing through the first circulation passage and the second heat medium flowing through the second circulation passage, wherein:
the first valve is an on-off valve disposed at the second circulation passage;
the first heat medium circulator is configured to cause the first heat medium to flow from the first heater through the heat exchanger toward the first temperature detector;
the controller performs the first heating operation;
in a case where the temperature detected by the first temperature detector after the first heating operation becomes not lower than a preset second predetermined temperature, the controller activates the second heat medium circulator; and
in a case where the temperature difference between the temperatures detected by the first temperature detector before and after the activation of the second heat medium circulator increases to become not smaller than a preset second temperature difference, the controller determines that the on-off valve is abnormal, informs that the on-off valve is abnormal, or stops an operation of the cogeneration.

5. The cogeneration system according to claim 1, further comprising:
a second circulation passage in which a second heat medium circulates;
a second heat medium circulator disposed at the second circulation passage and configured to convey the second heat medium;
a second tank disposed at the second circulation passage and configured to store the second heat medium; and
a heat exchanger configured to perform heat exchange between the first heat medium flowing through the first circulation passage and the second heat medium flowing through the second circulation passage, wherein:
the first valve is an on-off valve disposed at the second circulation passage;
the first heat medium circulator is configured to cause the first heat medium to flow from the first heater through the heat exchanger toward the first temperature detector;
the controller executes the first heating operation and activates the second heat medium circulator; and
in a case where the temperature detected by the first temperature detector after the activation of the second heat medium circulator is not lower than a preset third predetermined temperature or in a case where the temperature difference between the temperatures detected by the first temperature detector before and after the activation of the second heat medium circulator increases to become not smaller than a preset third temperature difference, the controller determines that the on-off valve is abnormal, informs that the on-off valve is abnormal, or stops the operation of the cogeneration.

6. The cogeneration system according to claim 1, further comprising:
a second circulation passage in which a second heat medium circulates;
a second heat medium circulator disposed at the second circulation passage and configured to convey the second heat medium;
a second tank disposed at the second circulation passage and configured to store the second heat medium; and
a heat exchanger configured to perform heat exchange between the first heat medium flowing through the first circulation passage and the second heat medium flowing through the second circulation passage, wherein:
the first valve is an on-off valve disposed at the second circulation passage;
the first temperature detector is disposed at the second circulation passage;
the controller executes the first heating operation and activates the second heat medium circulator; and
in a case where the temperature detected by the first temperature detector after the activation of the second heat medium circulator is lower than a preset fourth predetermined temperature or in a case where the temperature difference between the temperatures detected by the first temperature detector before and after the activation of the second heat medium circulator is a temperature change smaller than a preset fourth temperature difference, the controller determines that the on-off valve is abnormal, informs that the on-off valve is abnormal, or stops the operation of the cogeneration.

7. The cogeneration system according to claim 1, further comprising:
a second circulation passage in which a second heat medium circulates;
a second heat medium circulator disposed at the second circulation passage and configured to convey the second heat medium;
a second tank disposed at the second circulation passage and configured to store the second heat medium; and
a heat exchanger configured to perform heat exchange between the first heat medium flowing through the first circulation passage and the second heat medium flowing through the second circulation passage, wherein:
the first valve is an on-off valve disposed at the second circulation passage;
the first heater is provided in the second tank so as to heat the second heat medium;
the controller performs a second heating operation of activating the first heat medium circulator and the second heat medium circulator and heating the second heat medium by the first heater; and
in a case where the temperature detected by the first temperature detector after the second heating operation is lower than a preset fifth predetermined temperature or in a case where the temperature difference between the temperatures detected by the first temperature detector before and after the second heating operation is a temperature change smaller than a preset fifth temperature difference, the controller determines that the on-off valve is abnormal, informs that the on-off valve is abnormal, or stops the operation of the cogeneration.

8. The cogeneration system according to claim 1, further comprising:
a second circulation passage in which a second heat medium circulates;
a second heat medium circulator disposed at the second circulation passage and configured to convey the second heat medium;
a second tank disposed at the second circulation passage and configured to store the second heat medium; and
a heat exchanger configured to perform heat exchange between the first heat medium flowing through the first circulation passage and the second heat medium flowing through the second circulation passage, wherein:
the first valve is an on-off valve disposed at the second circulation passage;
the first heater is provided in the second tank so as to heat the second heat medium;
the first temperature detector is disposed at the second circulation passage;
the controller performs a third heating operation of activating the second heat medium circulator and heating the second heat medium by the first heater; and
in a case where the temperature detected by the first temperature detector after the third heating operation is lower than a preset sixth predetermined temperature or in a case where the temperature difference between the temperatures detected by the first temperature detector before and after the third heating operation is a temperature change smaller than a preset sixth temperature difference, the controller determines that the on-off valve is abnormal, informs that the on-off valve is abnormal, or stops the operation of the cogeneration.

9. The cogeneration system according to claim 1, wherein:
the first valve is a check valve;
the first circulation passage includes
a first pipe including one end connected to the first tank,
a second pipe including one end connected to the power generator,
a third pipe including one end connected to the power generator,
a fourth pipe including one end connected to the first tank,
a first connecting pipe connecting the other end of the first pipe and the other end of the second pipe, and
a second connecting pipe connecting the other end of the third pipe and the other end of the fourth pipe;
the controller performs the first heating operation; and
in a case where the temperature detected by the first temperature detector after the first heating operation is lower than the preset first predetermined temperature or in a case where the temperature difference between the temperatures detected by the first temperature detector before and after the first heating operation is the temperature change smaller than the preset first temperature difference, the controller determines that the connection of the pipes of the first circulation passage is abnormal, informs that the connection of the pipes of the first circulation passage is abnormal, or stops the operation of the cogeneration.

10. The cogeneration system according to claim 3, wherein:
the first valve is a check valve;
the first circulation passage includes, when viewed from a flow direction of the first heat medium,
a first pipe including one end connected to the first tank,
a second pipe including one end connected to the power generator,
a third pipe including one end connected to the power generator,
a fourth pipe including one end connected to the first tank,
a first connecting pipe connecting the other end of the first pipe and the other end of the second pipe, and
a second connecting pipe connecting the other end of the third pipe and the other end of the fourth pipe;
the controller performs the first heating operation; and
in a case where the temperature detected by the first temperature detector after the first heating operation is lower than the preset first predetermined temperature or in a case where the temperature difference between the temperatures detected by the first temperature detector before and after the first heating operation is the temperature change smaller than the preset first temperature difference, the controller determines that the connection of the pipes constituting the first circulation passage is abnormal, informs that the connection of the pipes of the first circulation passage is abnormal, or stops the operation of the cogeneration.

11. The cogeneration system according to claim 1, wherein:
the second circulation passage includes
a fifth pipe including one end connected to the second tank,
a sixth pipe including one end connected to the heat exchanger,
a seventh pipe including one end connected to the heat exchanger,
an eighth pipe including one end connected to the second tank,
a third connecting pipe connecting the other end of the fifth pipe and the other end of the sixth pipe, and
a fourth connecting pipe connecting the other end of the seventh pipe and the other end of the eighth pipe;
the first valve is a check valve disposed at the second circulation passage;
the controller performs the first heating operation;
in a case where the temperature detected by the first temperature detector after the first heating operation becomes not lower than a preset second predetermined temperature, the controller activates the second heat medium circulator; and
in a case where the temperature difference between the temperatures detected by the first temperature detector before and after the activation of the second heat medium circulator increases to become not smaller than a preset second temperature difference, the controller determines that the connection of the pipes constituting the second circulation passage is abnormal, informs that the connection of the pipes of the second circulation passage is abnormal, or stops the operation of the cogeneration.

12. A method of operating a cogeneration system,
the cogeneration system comprising:
a power generator configured to supply electric power and heat;
a first circulation passage in which a first heat medium circulates, the first heat medium recovering the heat from the power generator;
a first temperature detector disposed at the first circulation passage and configured to detect a temperature of the first heat medium;
a first heater disposed at the first circulation passage and configured to heat the first heat medium;
a first heat medium circulator disposed at the first circulation passage and configured to convey the first heat medium;
a first tank disposed at the first circulation passage and configured to store the first heat medium; and
a first valve disposed at the first circulation passage,
the method comprising:
(A) heating the first heat medium by the first heater and causing the first heat medium to flow from the first heater toward the first temperature detector by the first heat medium circulator; and
(B) in a case where the temperature detected by the first temperature detector after the step (A) is lower than a preset first predetermined temperature or in a case where a temperature difference between the temperatures detected by the first temperature detector before and after the step (A) is a temperature change smaller than a preset first temperature difference, determining that the cogeneration system is abnormal, informing that the cogeneration system is abnormal, or stopping an operation of the cogeneration system.
